(19) Europäisches Patentamt
European Patent Office
Office européen des brevets

(11) **EP 4 580 281 A1**

(12) **EUROPEAN PATENT APPLICATION**
published in accordance with Art. 153(4) EPC

(43) Date of publication:
**02.07.2025 Bulletin 2025/27**

(21) Application number: **23862483.7**

(22) Date of filing: **07.09.2023**

(51) International Patent Classification (IPC):
**H04W 72/04** (2023.01)

(52) Cooperative Patent Classification (CPC):
**H04L 5/00; H04W 72/04; H04W 72/044**

(86) International application number:
**PCT/CN2023/117583**

(87) International publication number:
**WO 2024/051789 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.09.2022 CN 202211093850**

(71) Applicant: **Huawei Technologies Co., Ltd.**
**Shenzhen, Guangdong 518129 (CN)**

(72) Inventors:
• **SUN, Yan**
  **Shenzhen, Guangdong 518129 (CN)**
• **QIU, Yuheng**
  **Shenzhen, Guangdong 518129 (CN)**
• **CHAI, Xiaomeng**
  **Shenzhen, Guangdong 518129 (CN)**
• **WU, Yiqun**
  **80992 Duesseldorf (DE)**

(74) Representative: **Pfenning, Meinig & Partner mbB**
**Patent- und Rechtsanwälte**
**Theresienhöhe 11a**
**80339 München (DE)**

(54) **BEAM MANAGEMENT METHOD**

(57)    This disclosure provides a beam management method, including: A communication device like a terminal device or an access network device maps a reference signal measurement quantity to input adaptation information by using an input adaptation layer, where a beam pattern corresponding to the reference signal measurement quantity is a first beam pattern; and obtains a first beam prediction result by using a beam prediction model, where an input of the beam prediction model includes the input adaptation information, the input of the beam prediction model matches a second beam pattern, and the first beam pattern is different from the second beam pattern. According to the method, system overheads can be reduced.

[FIG. 7]

Scenario 1: A pattern matches a beam prediction model
Pattern A: 16 beams are swept — Beam prediction model — Predicted Top-5 beams

Scenario 2: An input format does not match a beam prediction model
Pattern B: 27 beams are swept — Input adaptation layer — Beam prediction model — Predicted Top-5 beams

Scenario 3: An output format does not match a beam prediction model
Pattern A: 16 beams are swept — Beam prediction model — Output adaptation layer — Predicted Top-3 beams

Scenario 4: An input format and an output format do not match a beam prediction model
Pattern B: 27 beams are swept — Input adaptation layer — Beam prediction model — Output adaptation layer — Predicted Top-3 beams

**Description**

TECHNICAL FIELD

This application relates to the field of communication technologies, and in particular, to a beam management method and an apparatus.

BACKGROUND

In a wireless communication network, for example, in a mobile communication network, services supported by the network are increasingly diversified, and therefore, requirements that need to be met are increasingly diversified. For example, the network needs to be capable of supporting ultra-high rates, ultra-low latency, and/or ultra-large connections. This feature makes network planning, network configuration, and/or resource scheduling increasingly complex. In addition, because the network has increasingly powerful functions, for example, supports an increasingly high spectrum and new technologies such as a high-order multiple-input multiple-output (multiple-input multiple-output, MIMO) technology, beamforming, and/or beam management, network energy saving becomes a hot research topic. These new requirements, scenarios, and features bring unprecedented challenges to network planning, operation and maintenance, and efficient operation. To address these challenges, an artificial intelligence technology may be introduced into the wireless communication network, to implement network intelligence. Based on this, how to effectively implement artificial intelligence in the network is a problem worth studying.

SUMMARY

This disclosure provides a beam management method and an apparatus, to reduce overheads in a beam management process.

According to a first aspect, a beam management method is provided. The method may be implemented at a reference signal receiver. For example, the method may be performed by a terminal device, an access network device, a module (for example, a DU or a near-real-time RIC) of the access network device, or a non-real-time RIC.

In a possible implementation, the method includes: mapping a reference signal measurement quantity to input adaptation information by using an input adaptation layer, where a beam pattern corresponding to the reference signal measurement quantity is a first beam pattern; and obtaining a first beam prediction result by using a beam prediction model, where an input of the beam prediction model includes the input adaptation information, the input of the beam prediction model matches a second beam pattern, and the first beam pattern is different from the second beam pattern.

In a possible implementation, the method includes: obtaining a first beam prediction result by using a beam prediction model, where an input of the beam prediction model includes a reference signal measurement quantity, and a beam pattern corresponding to the reference signal measurement quantity is a second beam pattern; and mapping the first beam prediction result to a second beam prediction result by using an output adaptation layer.

In a possible implementation, the method includes: mapping a reference signal measurement quantity to input adaptation information by using an input adaptation layer, where a beam pattern corresponding to the reference signal measurement quantity is a first beam pattern; obtaining a first beam prediction result by using a beam prediction model, where an input of the beam prediction model includes the input adaptation information, the input of the beam prediction model matches a second beam pattern, and the first beam pattern is different from the second beam pattern; and mapping the first beam prediction result to a second beam prediction result by using an output adaptation layer.

According to the foregoing method, when a system supports a plurality of sparse beam patterns, a small quantity of beam prediction models and an input adaptation layer and/or an output adaptation layer whose scale is less than that of the beam prediction model may be set for beam management, without setting one beam prediction model for each sparse beam pattern. According to the method, storage overheads of the beam prediction model may be reduced. When information about the beam prediction model needs to be exchanged between different network elements, signaling overheads may be further reduced.

In a possible design, the first beam prediction result includes Top-K1 beams in a full beam corresponding to the first beam pattern or the second beam pattern, where K1 is a positive integer.

In a possible design, the second beam prediction result includes Top-K2 beams in the full beam corresponding to the first beam pattern or the second beam pattern, where K2 is a positive integer.

According to the method, a top beam in the full beam may be predicted by sweeping the sparse beam pattern and using the beam prediction model, without obtaining the top beam in the full beam by sweeping the full beam, so that latency overheads and reference signal overheads in a beam management process can be reduced.

In a possible design, the information about the beam prediction model is received. According to the method, the beam prediction model may be flexibly configured.

In a possible design, the beam prediction model is included in a candidate beam prediction model set, each beam prediction model in the candidate beam prediction model set corresponds to one beam pattern, and the beam prediction model corresponds to the second beam pattern. Optionally, information about each beam prediction model in the candidate beam prediction model set is agreed on in a protocol or received from a transmitter. Optionally, a correspondence between a beam prediction model in the candidate beam prediction model set and a (sparse) beam pattern is agreed on in a protocol or received from a transmitter. Optionally, information indicating the second beam pattern is received. According to the method, signaling overheads for configuring the beam prediction model may be reduced.

In a possible design, information about the input adaptation layer or information about the output adaptation layer is received. According to the method, the input adaptation layer and/or the output adaptation layer may be flexibly configured.

In a possible design, the input adaptation layer or the output adaptation layer is obtained through training.

Optionally, an ideal beam prediction result is obtained based on a measurement quantity corresponding to a full beam. A measurement quantity corresponding to a sparse beam of the first beam pattern is mapped to the input adaptation information by using the input adaptation layer. An actual beam prediction result is obtained based on the input adaptation information and the beam prediction model. A parameter of the input adaptation layer is adjusted based on the ideal beam prediction result and the actual beam prediction result, to enable a difference between the ideal beam prediction result and the actual beam prediction result to be less than a threshold.

Optionally, an ideal beam prediction result is obtained based on a measurement quantity corresponding to a full beam. An actual beam prediction result is obtained based on measurement of a sparse beam of the second beam pattern, the beam prediction model, and the output adaptation layer. A parameter of the output adaptation layer is adjusted based on the ideal beam prediction result and the actual beam prediction result, to enable a difference between the ideal beam prediction result and the actual beam prediction result to be less than a threshold.

Optionally, an ideal beam prediction result is obtained based on a measurement quantity corresponding to a full beam. A measurement quantity corresponding to a sparse beam of the first beam pattern is mapped to the input adaptation information by using the input adaptation layer. An actual beam prediction result is obtained based on the input adaptation information, the beam prediction model, and the output adaptation layer. At least one of a parameter of the input adaptation layer and a parameter of the output adaptation layer is adjusted based on the ideal beam prediction result and the actual beam prediction result, to enable a difference between the ideal beam prediction result and the actual beam prediction result to be less than a threshold.

According to the method, the input adaptation layer and/or the output adaptation layer may be flexibly adjusted based on a channel condition, so that the input adaptation layer and/or the output adaptation layer better match/matches the current channel condition, and matching performance is better.

According to a second aspect, a beam management method is provided. The method may be implemented at a reference signal transmitter. For example, the method may be performed by a terminal device, an access network device, a module (for example, a DU or a near-real-time RIC) of the access network device, or a non-real-time RIC.

In a possible implementation, the method includes: sending information about an input adaptation layer. The input adaptation layer is configured to perform adaptation on a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern.

In a possible implementation, the method includes: sending information about an output adaptation layer. The output adaptation layer is configured to map a first beam prediction result output by a beam prediction model to a second beam prediction result, and the first beam prediction result is different from the second beam prediction result.

In a possible implementation, the method includes: sending information about an input adaptation layer and information about an output adaptation layer. The input adaptation layer is configured to perform adaptation on a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern. The output adaptation layer is configured to map a first beam prediction result output by the beam prediction model to a second beam prediction result, and the first beam prediction result is different from the second beam prediction result.

In a possible design, the method further includes: indicating the beam prediction model from a candidate beam prediction model set. Each beam prediction model in the candidate beam prediction model set corresponds to one beam pattern. Optionally, information about each beam prediction model in the candidate beam prediction model set is agreed on in a protocol, or the method includes: sending information about each beam prediction model in the candidate beam prediction model set. Optionally, a correspondence between a beam prediction model in the candidate beam prediction model set and a (sparse) beam pattern is agreed on in a protocol, or the method includes: sending a correspondence between a beam prediction model in the candidate beam prediction model set and a (sparse) beam pattern. Optionally, the method includes: sending information indicating the second beam pattern.

According to a third aspect, a communication apparatus is provided. The communication apparatus may implement the method according to the first aspect.

In an optional implementation, the apparatus may include modules that are in one-to-one correspondence with the methods/operations/steps/actions described in the first aspect. The modules may be implemented through a hardware circuit, software, or a combination of a hardware circuit and software. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, the processing unit is configured to: map a reference signal measurement quantity to input adaptation information by using an input adaptation layer, where a beam pattern corresponding to the reference signal measurement quantity is a first beam pattern; and obtain a first beam prediction result by using a beam prediction model, where an input of the beam prediction model includes the input adaptation information, the input of the beam prediction model matches a second beam pattern, and the first beam pattern is different from the second beam pattern. A reference signal is received by the receiving unit.

For example, the processing unit is configured to: obtain a first beam prediction result by using a beam prediction model, where an input of the beam prediction model includes a reference signal measurement quantity, and a beam pattern corresponding to the reference signal measurement quantity is a second beam pattern; and map the first beam prediction result to a second beam prediction result by using an output adaptation layer. A reference signal is received by the receiving unit.

For example, the processing unit is configured to: map a reference signal measurement quantity to input adaptation information by using an input adaptation layer, where a beam pattern corresponding to the reference signal measurement quantity is a first beam pattern;

obtain a first beam prediction result by using a beam prediction model, where an input of the beam prediction model includes the input adaptation information, the input of the beam prediction model matches a second beam pattern, and the first beam pattern is different from the second beam pattern; and map the first beam prediction result to a second beam prediction result by using an output adaptation layer.

For descriptions of the first beam prediction result and the second beam prediction result, refer to the first aspect. Details are not described herein again.

In a possible design, the receiving unit is configured to receive information about the beam prediction model.

In a possible design, the beam prediction model is included in a candidate beam prediction model set, each beam prediction model in the candidate beam prediction model set corresponds to one beam pattern, and the beam prediction model corresponds to the second beam pattern. Optionally, information about each beam prediction model in the candidate beam prediction model set is agreed on in a protocol or received from a transmitter by the receiving unit. Optionally, a correspondence between a beam prediction model in the candidate beam prediction model set and a (sparse) beam pattern is agreed on in a protocol or received from a transmitter by the receiving unit. Optionally, the receiving unit is configured to receive information indicating the second beam pattern.

In a possible design, the receiving unit is configured to receive information about the input adaptation layer or information about the output adaptation layer.

In a possible design, the processing unit is configured to obtain the input adaptation layer or the output adaptation layer through training. For a specific training method, refer to the first aspect. Details are not described herein again.

In another possible implementation, the communication apparatus includes a processor, configured to implement the method described in the first aspect. The apparatus may further include a memory, configured to store instructions and/or data. The memory is coupled to the processor. When executing the program instructions stored in the memory, the processor can implement the method described in the first aspect. The apparatus may further include a communication interface, and the communication interface is used by the apparatus to communicate with another device. For example, the communication interface may be a transceiver, a circuit, a bus, a module, a pin, or another type of communication interface, and the another device may be a model inference node or the like. A function of the processor is similar to that of the foregoing processing unit, and a function of the communication interface is similar to that of the foregoing transceiver unit. Details are not described herein again.

According to a fourth aspect, a communication apparatus is provided. The communication apparatus may implement the method according to the second aspect.

In an optional implementation, the apparatus may include modules that are in one-to-one correspondence with the methods/operations/steps/actions described in the second aspect. The modules may be implemented through a hardware circuit, software, or a combination of a hardware circuit and software. In an optional implementation, the communication apparatus includes a baseband apparatus, or includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, the sending unit is configured to send information about an input adaptation layer. The input adaptation layer is configured to perform adaptation on a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern. The information about the input adaptation layer is determined by the processing unit.

For example, the sending unit is configured to send information about an output adaptation layer. The output adaptation layer is configured to map a first beam prediction result output by a beam prediction model to a second beam prediction result, and the first beam prediction result is different from the second beam prediction result. The information about the output adaptation layer is determined by the processing unit.

For example, the sending unit is configured to send information about an input adaptation layer and information about an output adaptation layer. The input adaptation layer is configured to perform adaptation on a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern. The output adaptation layer is configured to map a first beam prediction result output by the beam prediction model to a second beam prediction result, and the first beam prediction result is different from the second beam prediction result. The information about the input adaptation layer and the information about the output adaptation layer are determined by the processing unit.

In a possible design, the sending unit is further configured to indicate the beam prediction model from a candidate beam prediction model set. Each beam prediction model in the candidate beam prediction model set corresponds to one beam pattern. Optionally, information about each beam prediction model in the candidate beam prediction model set is agreed on in a protocol, or the sending unit is further configured to send information about each beam prediction model in the candidate beam prediction model set. Optionally, a correspondence between a beam prediction model in the candidate beam prediction model set and a (sparse) beam pattern is agreed on in a protocol, or the sending unit is further configured to send a correspondence between a beam prediction model in the candidate beam prediction model set and a (sparse) beam pattern. Optionally, the sending unit is further configured to send information indicating the second beam pattern.

In another possible implementation, the communication apparatus includes a processor, configured to implement the method described in the second aspect. The apparatus may further include a memory, configured to store instructions and/or data. The memory is coupled to the processor. When executing the program instructions stored in the memory, the processor can implement the method described in the second aspect. The apparatus may further include a communication interface, and the communication interface is used by the apparatus to communicate with another device. For example, the communication interface may be a transceiver, a circuit, a bus, a module, a pin, or another type of communication interface, and the another device may be a model inference node or the like. A function of the processor is similar to that of the foregoing processing unit, and a function of the communication interface is similar to that of the foregoing transceiver unit. Details are not described herein again.

According to a fifth aspect, a computer-readable storage medium is provided, and includes instructions. When the instructions are run on a computer, the computer is enabled to perform the method in either the first aspect or the second aspect.

According to a sixth aspect, a chip system is provided. The chip system includes a processor, may further include a memory, and is configured to implement the method in either the first aspect or the second aspect. The chip system may include a chip, or may include a chip and another discrete component.

According to a seventh aspect, a computer program product is provided, and includes instructions.

When the instructions are run on a computer, the computer is enabled to perform the method in either the first aspect or the second aspect.

According to an eighth aspect, a communication system is provided. The system includes the apparatus in the third aspect and the apparatus in the fourth aspect.

BRIEF DESCRIPTION OF DRAWINGS

FIG. 1 is a diagram of an architecture of a communication system 1000 according to this disclosure;
FIG. 2A is a diagram of a neuron structure according to this disclosure;
FIG. 2B is a diagram of an FNN network according to this disclosure;
FIG. 3A to FIG. 3D are example diagrams of application frameworks of AI in a communication system according to this disclosure;
FIG. 4 shows an AI-based beam management method according to this disclosure;
FIG. 5 is an example diagram of a top beam according to this disclosure;
FIG. 6 shows four different sparse beam patterns of a full beam including 64 beams according to this disclosure;
FIG. 7 shows a beam management method according to this disclosure;
FIG. 8 is an example diagram of a structure of an input adaptation layer according to this disclosure;
FIG. 9 is an example diagram of a structure of an output adaptation layer according to this disclosure;
FIG. 10 and FIG. 11 each show a beam prediction procedure according to this disclosure;
FIG. 12A shows a training method for an input adaptation layer according to this disclosure;
FIG. 12B shows a training method for an output adaptation layer according to this disclosure;
FIG. 12C shows a training method for an input adaptation layer and/or an output adaptation layer according to this disclosure; and
FIG. 13 and FIG. 14 each are an example diagram of an apparatus according to this disclosure.

DESCRIPTION OF EMBODIMENTS

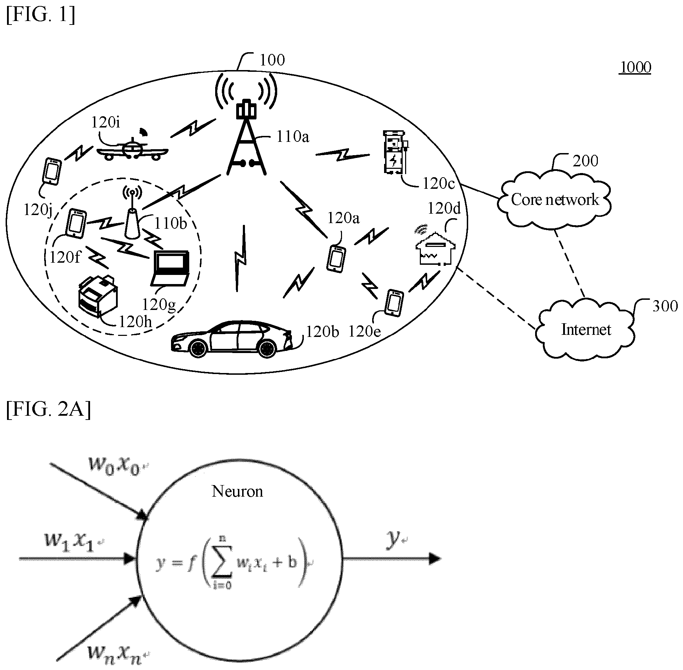

FIG. 1 is a diagram of an architecture of a communication system 1000 to which this disclosure is applicable. As shown in FIG. 1, the communication system includes a radio access network (radio access network, RAN) 100 and a core network (core network, CN) 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner. The access network device is connected to the core network in a wireless or wired manner. A core network device and the access network device may be different physical devices that are independent of each other, or functions of the core network device and logical functions of the access network device may be integrated into a same physical device, or a part of the functions of the core network device and a part of the functions of the access network device may be integrated into one physical device. Physical existence forms of the core network device and the access network device are not limited in this disclosure. The terminal devices may be connected to each other in a wireless manner. The access network devices may be connected to each other in a wired or wireless manner. FIG. 1 is merely a diagram, and is not intended to limit this disclosure. For example, the communication system may further include another network device, for example, may further include a wireless relay device and a wireless backhaul device.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation NodeB in a 6th generation (6th generation, 6G) mobile communication system, a base station in a future mobile communication system, an access node in a wireless fidelity (wireless fidelity, Wi-Fi) system, or the like. 5G may also be referred to as new radio (new radio, NR). Alternatively, the access network device may be a module or a unit that completes a part of functions of a base station. For example, the access network device may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this disclosure.

In this disclosure, an apparatus configured to implement the function of the access network device may be the access network device, or may be an apparatus that can support the access network device in implementing the function, for example, a chip system, a hardware circuit, a software module, or a combination of a hardware circuit and a software module. The apparatus may be mounted in the access network device or used together with the access network device. In this disclosure, the chip system may include a chip, or may include a chip and another discrete component. For ease of description, the following describes the technical solutions provided in this disclosure by using an example in which the apparatus configured to implement the function of the access network device is the access network device.

(1) Protocol layer structure

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer. For example, the user plane protocol layer structure may include at least one of the following: a service data adaptation protocol (service data adaptation protocol, SDAP) layer, a PDCP layer, an RLC layer, a MAC layer, and a physical layer.

The protocol layer structure between the access network device and the terminal device may be considered as an access stratum (access stratum, AS) structure. Optionally, a non-access stratum (non-access stratum, NAS) may further exist over the AS, and is used by the access network device to forward information from the core network device to the terminal device, or is used by the access network device to forward information from the terminal device to the core network device. In this case, it may be considered that there is a logical interface between the terminal device and the core network device. Optionally, the access network device may forward the information between the terminal device and the core network device through transparent transmission. For example, a NAS message may be mapped to or included in RRC signaling as an element of the RRC signaling.

Optionally, the protocol layer structure between the access network device and the terminal device may further include an artificial intelligence (artificial intelligence, AI) layer used for transmission of data related to an AI function.

The access network device may include a CU and a DU. This design may be referred to as CU and DU split. A plurality of DUs may be controlled by one CU in a centralized manner. For example, an interface between the CU and the DU is referred to as an F1 interface. A control plane (control plane, CP) interface may be F1-C, and a user plane (user plane, UP) interface may be F1-U. Specific names of the interfaces are not limited in this disclosure. The CU and the DU may be divided according to a protocol layer of a wireless network. For example, functions of a PDCP layer and a protocol layer above the PDCP layer (for example, an RRC layer and an SDAP layer) are set in the CU, and functions of a protocol layer below the PDCP layer (for example, an RLC layer, a MAC layer, and a PHY layer) are set in the DU. For another example, functions of the protocol layer above the PDCP layer are set in the CU, and functions of the PDCP layer and the protocol layer below the PDCP layer are set in the DU. This is not limited.

The division into processing functions of the CU and the DU based on protocol layers is merely an example, and the processing functions of the CU and the DU may alternatively be divided in another division manner. For example, the CU or the DU may be divided to have functions of more protocol layers. For another example, the CU or the DU is divided to have a part of processing functions of protocol layers. For example, a part of functions of the RLC layer and functions of protocol layers above the RLC layer are set in the CU, and remaining functions of the RLC layer and functions of protocol layers below the RLC layer are set in the DU. For another example, division of functions of the CU or the DU may alternatively be performed based on service types or other system requirements. For example, division may be performed based on latency. Functions whose processing time needs to meet a latency requirement are set in the DU, and functions whose processing time does not need to meet the latency requirement are set in the CU.

Optionally, the CU may have one or more functions of the core network.

Optionally, a radio unit (radio unit, RU) of the DU may be disposed remotely. The RU has a radio frequency function. For example, the DU and the RU may be divided at the PHY layer. For example, the DU may implement higher-layer functions of the PHY layer, and the RU may implement lower-layer functions of the PHY layer. When sending is performed, functions of the PHY layer may include at least one of the following: adding a cyclic redundancy check (cyclic redundancy check, CRC) bit, channel encoding, rate matching, scrambling, modulation, layer mapping, precoding, resource mapping, physical antenna mapping, or radio frequency sending. When receiving is performed, functions of the PHY layer may include at least one of the following: CRC check, channel decoding, rate de-matching, descrambling, demodulation, layer demapping, channel detection, resource demapping, physical antenna demapping, or radio frequency receiving. The higher-layer functions of the PHY layer may include a part of the functions of the PHY layer. For example, the part of functions are closer to the MAC layer. The lower-layer functions of the PHY layer may include another part of the functions of the PHY layer. For example, the part of functions are closer to the radio frequency function. For example, the higher-layer functions of the PHY layer may include adding a CRC bit, channel encoding, rate matching, scrambling, modulation, and layer mapping, and the lower-layer functions of the PHY layer may include precoding, resource mapping, physical antenna mapping, and radio frequency sending. Alternatively, the higher-layer functions of the PHY layer may include adding a CRC bit, channel encoding, rate matching, scrambling, modulation, layer mapping, and precoding, and the lower-layer functions of the PHY layer may include resource mapping, physical antenna mapping, and radio frequency sending. For example, the higher-layer functions of the PHY layer may include CRC check, channel decoding, rate de-matching, decoding, demodulation, and layer demapping, and the lower-layer functions of the PHY layer may include channel detection, resource demapping, physical antenna demapping, and radio frequency receiving. Alternatively, the higher-layer functions of the PHY layer may include CRC check, channel decoding, rate de-matching, decoding, demodulation, layer demapping, and channel detection, and the lower-layer functions of the PHY layer may include resource demapping, physical antenna demapping, and radio frequency receiving.

Optionally, the functions of the CU may be further divided, and a control plane and a user plane are split and implemented by using different entities. Split entities are respectively a control plane CU entity (namely, a CU-CP entity) and a user plane CU entity (namely, a CU-UP entity). The CU-CP entity and the CU-UP entity may be separately connected to the DU. In this disclosure, an entity may be understood as a module or a unit, and may exist in a form of a hardware structure, a software module, or a combination of a hardware structure and a software module. This is not limited.

Optionally, any one of the CU, the CU-CP, the CU-UP, the DU, and the RU may be a software module, a hardware structure, or a combination of a software module and a hardware structure. This is not limited. Different entities may exist in a same form or different forms. For example, the CU, the CU-CP, the CU-UP, and the DU are software modules, and the RU is a hardware structure. For brevity of description, all possible combination forms are not enumerated herein. The modules and methods performed by the modules also fall within the protection scope of this disclosure. For example, when the method in this disclosure is performed by the access network device, the method may be specifically performed by at least one of the CU, the CU-CP, the CU-UP, the DU, the RU, or a near-real-time RIC described below.

In this disclosure, when the function of the access network device is completed by a module of the access network device, for example, when the DU sends a signal like a reference signal to the terminal device, it may be understood as that a destination of the signal is the terminal device. The sending is logically performed, and the reference signal is not limited to being physically sent by the DU directly to the terminal device.

In this disclosure, that a module A sends information to the terminal includes: The module A sends the information to the terminal through an air interface. Optionally, the module A may perform a baseband operation and/or an intermediate radio frequency operation on the information. Alternatively, the module A delivers the information to a module B, and the module B sends the information to the terminal. When sending the information to the terminal, the module B may transparently transmit the information, segment the information and then send the information, or multiplex the information and other information and then send the information. Optionally, the module B may perform a baseband operation and/or an intermediate radio frequency operation on the information and then send the information. Optionally, the module B may encapsulate the information in a data packet. Optionally, the module B may further add a packet header and/or a padding bit to the data packet.

In this disclosure, when the function of the access network device is completed by a module of the access network device, for example, when the DU receives a signal like a reference signal from the terminal device, it may be understood as that a source of the signal is the terminal device. The transmission is logically performed, and the reference signal is not limited to being physically sent by the terminal device directly to the DU.

In this disclosure, receiving information from the terminal device may be understood as that a source of the information is the terminal device. For example, that a module A receives information from the terminal device includes: The module A receives the information from the terminal through an air interface. Optionally, the module A may perform a baseband operation and/or an intermediate radio frequency operation on the information. Alternatively, a module B receives the information from the terminal through an air interface, and delivers the information to the module A. That the module B delivers the information to the module A includes: The module B transparently delivers the received information to the module A, combines a plurality of received segments into the information and then delivers the information to the module A, or extracts the information from multiplexing information and then delivers the information to the module A. Optionally, the module B may perform a baseband operation and/or an intermediate radio frequency operation on the received information and then send the information. Optionally, the information received by the module B is encapsulated in a data packet. Optionally, the data packet includes a packet header and/or a padding bit, and the like.

The foregoing module A or B may be one module or may be a plurality of modules that are sequentially coupled. This is not limited. For example, the module A is a DU module, and the module B is an RU module. For another example, the module A is a CU-CP module, and the module B is a DU module and an RU module.

The terminal device may also be referred to as a terminal, user equipment (user equipment, UE), a mobile station, a mobile terminal, or the like. The terminal device may be widely used in various scenarios for communication. For example, the scenario includes but is not limited to at least one of the following: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D) communication, vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, smart office, smart wearable, smart transportation, a smart city, or the like. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in this disclosure.

In this disclosure, an apparatus configured to implement a function of the terminal device may be a terminal device, or may be an apparatus that can support the terminal device in implementing the function, for example, a chip system, a hardware circuit, a software module, or a hardware circuit combined with a software module. The apparatus may be mounted in the terminal device or may be used together with the terminal device. For ease of description, the following describes the provided technical solutions by using an example in which the apparatus configured to implement the function of the terminal device is the terminal device.

In this disclosure, the access network device and/or the terminal device may be at a fixed location or may be movable. The access network device and/or the terminal device may be deployed on land, including indoor or outdoor, in a handheld manner or vehicle-mounted manner, may be deployed on water, or may be deployed on an airplane, a balloon, and an artificial satellite in air. Application scenarios of the access network device and the terminal device are not limited in this disclosure. The access network device and the terminal device may be deployed in a same scenario or different scenarios. For example, the access network device and the terminal device are both deployed on the land. Alternatively, the access network device is deployed on the land and the terminal device is deployed on the water. Examples are not provided one by one.

Roles of the access network device and the terminal device may be relative. For example, the helicopter or uncrewed aerial vehicle 120i in FIG. 1 may be configured as a mobile access network device. For the terminal devices 120j that access the radio access network 100 via 120i, the terminal device 120i is an access network device. However, for the base station 110a, 120i is a terminal device. In other words, 110a and 120i communicate with each other according to a wireless air interface protocol. 110a and 120i may alternatively communicate with each other according to an interface protocol between base stations. In this case, relative to 110a, 120i is also an access network device. Therefore, both the access network device and the terminal device may be collectively referred to as communication apparatuses. 110a and 110b in FIG. 1 may be referred to as communication apparatuses having the function of the access network device, and 120a to 120j in FIG. 1 may be referred to as communication apparatuses having the function of the terminal device.

In a conventional communication system, communication is performed mainly by using a frequency spectrum of a low- and medium-frequency band below 6 gigahertz (gigahertz, GHz). However, spectrum resources of the low- and medium-frequency band below 6 GHz are relatively insufficient. Therefore, in a 5G communication system, to introduce more resources to improve a communication rate, a high-frequency band (for example, a millimeter wave (millimeter wave, mmW) frequency band) is introduced for wireless communication. To cope with a weak penetration capability and a strong path fading effect of a high-frequency signal, when transmitting the high-frequency signal, a transmitter may improve signal transmission quality by using a beamforming technology. To improve performance of the beamforming technology, in this disclosure, artificial intelligence (artificial intelligence, AI) is introduced into the beamforming technology.

The artificial intelligence enables machines to have human intelligence. For example, machines can use computer software and hardware to simulate some intelligent human behaviors. To implement the artificial intelligence, a machine learning method may be used. In the machine learning method, a machine obtains a model through learning (or training) by using training data. The model represents mapping from input to output. The model obtained through learning may be used for inference (or prediction). To be specific, the model may be used to predict an output corresponding to a given input. The output may also be referred to as an inference result.

Machine learning may include supervised learning, unsupervised learning, and reinforcement learning.

In terms of the supervised learning, based on collected sample values and sample labels, a mapping relationship between the sample values and the sample labels is learned by using a machine learning algorithm, and the learned mapping relationship is expressed by using an AI model. A process of training the machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping relationship. The mapping relationship learned through the supervised learning may include linear mapping or non-linear mapping. Learning tasks may be classified into a classification task and a regression task based on types of labels.

In terms of the unsupervised learning, an internal pattern of a sample is explored autonomously by using an algorithm based on a collected sample value. For a specific type of algorithm of the unsupervised learning, a sample is used as a supervised signal, in other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from the supervised learning and the unsupervised learning, the reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. A goal of the reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

An idea of the neural network is from a neuron structure of brain tissue. For example, each neuron performs a weighted summation operation on input values of the neuron, and outputs an operation result based on an activation function. FIG. 2A is a diagram of a neuron structure. It is assumed that an input of a neuron is $x = [x_0, x_1, ... , x_n]$, and a weight corresponding to each input is respectively $w = [w, w_1, ... , w_n]$, where n is a positive integer, $w_i$ and $x_i$ may be various possible types such as a decimal, an integer (for example, 0, a positive integer, or a negative integer), or a complex number. $w_i$ is used as a weight of $x_i$, and is used to weight $x_i$. An offset for perform-

ing weighted summation on the input values based on the weights is, for example, $b$. There may be a plurality of forms of the activation function. It is assumed that an activation function of a neuron is $y = f(z) = \max(0, z)$, and an output of the neuron is

$$y = f\left(\sum_{i=0}^{i=n} w_i * x_i + b\right) =$$

$$\max(0, \sum_{i=0}^{i=n} w_i * x_i + b)$$ . For another example, an activation function of a neuron is $y = f(z) = z$, and an output of the neuron is

$$y = f\left(\sum_{i=0}^{i=n} w_i * x_i + b\right) = \sum_{i=0}^{i=n} w_i * x_i + b$$

. $b$ may be any possible type like a decimal, an integer (for example, 0, a positive integer, or a negative integer), or a complex number. Activation functions of different neurons in the neural network may be the same or different.

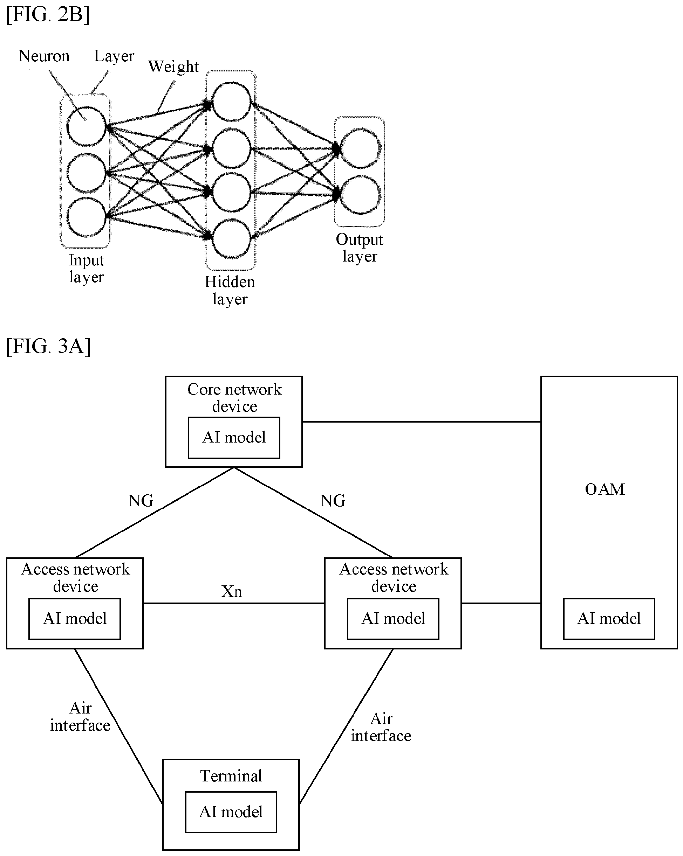

The neural network generally includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may refer to a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to FIG. 2B. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network in this disclosure is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

A feature of the FNN network is that neurons at adjacent layers are completely connected to each other. Due to this feature, the FNN usually needs a large amount of storage space, resulting in high calculation complexity. FIG. 2B shows an FNN network.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size rather than performing an operation by using all input information at one time, which greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

As described above, a loss function may be defined in a model training process. The loss function describes a gap or a difference between an output value of the model and an ideal target value. A specific form of the loss function is not limited in this disclosure. The model training process may be considered as the following process: A part of or all parameters of the model are adjusted, so that a value of the loss function is less than a threshold or meets a target requirement.

The model may also be referred to as an AI model, a rule, or another name. This is not limited. An AI model may be considered as a specific method for implementing an AI function. The AI model represents a mapping relationship or a function between an input and an output of the model. The AI function may include at least one of the following: data collection, model training (or model learning), model information release, model deduction (or referred to as model inference, inference, prediction, or the like), model monitoring or model verification, inference result release, or the like. The AI function may also be referred to as an AI (related) operation or an AI-related function.

In this disclosure, an independent network element (for example, referred to as an AI network element, an AI node, or an AI device) may be introduced into the communication system shown in FIG. 1, to implement a part of or all AI-related operations. The AI network element may be directly connected to the access network device, or may be indirectly connected to the access network device through a third-party network element. Optionally, the third-party network element may be a core network element. Alternatively, an AI entity may be configured or disposed in another network element in the communication system, to implement an AI-related operation. The AI entity may also be referred to as an AI module, an AI unit, or another name, and is mainly configured to implement a part or all AI functions. A specific name of the AI entity is not limited in this disclosure. Optionally, the another network element may be an access network device, a core network device, a cloud server, a network management system (operation, administration and maintenance, OAM), or the like. In this case, a network element that performs the AI-related operation is a network element in which an AI function is built. Because both the AI network element and the AI entity implement the AI-related function, for ease of description, the AI network element and the network element in which the AI function is built are collectively referred to as an AI function network element below.

In this disclosure, the OAM is configured to operate, administer, and/or maintain a core network device (a network management system of the core network device), and/or is configured to operate, administer, and/or maintain an access network device (a network management system of the access network device). For example, this disclosure includes first OAM and second OAM, where the first OAM is a network management system of a core network device, and the second OAM is a network management system of an access network device. Optionally, the first OAM and/or the second OAM include/includes an AI entity. For another example, this disclosure includes third OAM, and the third OAM is a network management system of both a core network device and an access network device. Optionally, the third OAM includes an AI entity.

Optionally, to match and support an AI function, an AI entity may be integrated into the terminal or a terminal chip.

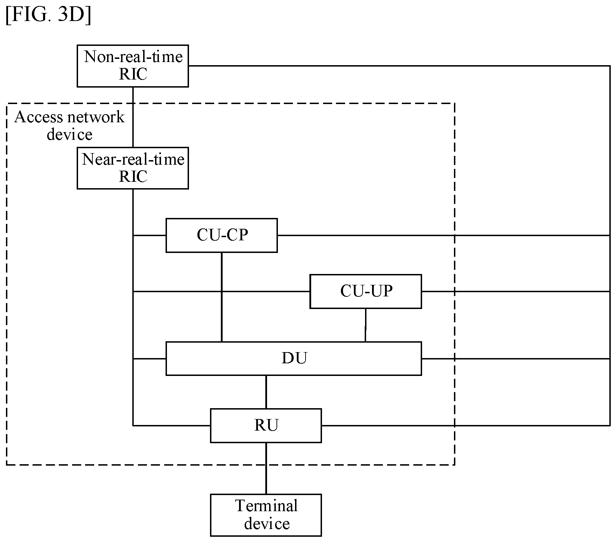

FIG. 3A to FIG. 3D are example diagrams of application frameworks of AI in a communication system.

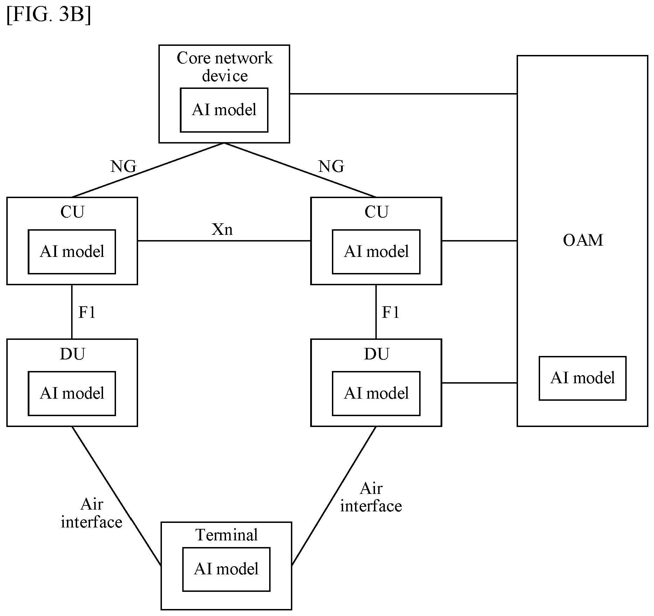

Optionally, as shown in FIG. 3A, an AI model is deployed in at least one of a core network device, an access network device, a terminal, or OAM, and a corresponding function is implemented by using the AI model. In this disclosure, AI models deployed in different nodes may be the same or different. In this disclosure, the models are different in at least one of the following: a structure parameter of the model (for example, at least one of a quantity of neural network layers, a neural network width, a connection relationship between layers, a weight of a neuron, an activation function of the neuron, or an offset in an activation function), an input parameter of the model (for example, a type of the input parameter and/or a dimension of the input parameter), or an output parameter of the model (for example, a type of the output parameter and/or a dimension of the output parameter). Different input parameters of the model and/or different output parameters of the model may be described as different functions of the model. Different from FIG. 3A, in FIG. 3B, a function of the access network device is split into a CU and a DU. One or more AI models may be deployed in the CU, and/or one or more AI models may be deployed in the DU. Optionally, the CU in FIG. 3B may be further split into a CU-CP and a CU-UP. Optionally, one or more AI models may be deployed in the CU-CP, and/or one or more AI models may be deployed in the CU-UP. Optionally, the OAM in FIG. 3A or FIG. 3B may be further split into OAM of the access network device and OAM of the core network device.

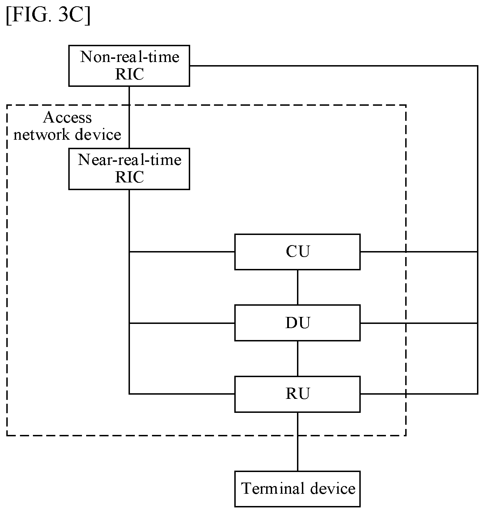

Optionally, as shown in FIG. 3C, in a possible implementation, the access network device includes a near-real-time access network intelligent controller (RAN intelligent controller, RIC) module, configured to perform model training and inference. For example, the near-real-time RIC may be configured to train an AI model and use the AI model for inference. For example, the near-real-time RIC may obtain information about a network side and/or a terminal side from at least one of the CU, the DU, an RU, or the terminal device, and the information may be used as training data or inference data. Optionally, the near-real-time RIC may deliver an inference result to at least one of the CU, the DU, the RU, or the terminal device. Optionally, the CU and the DU may exchange the inference result. Optionally, the DU and the RU may exchange the inference result. For example, the near-real-time RIC delivers the inference result to the DU, and the DU forwards the inference result to the RU.

Optionally, as shown in FIG. 3C, in another possible implementation, there is a non-real-time RIC outside the access network device (optionally, the non-real-time RIC may be located in the OAM, a cloud server, or the core network device), configured to perform model training and inference. For example, the non-real-time RIC is configured to train an AI model and use the model for inference. For example, the non-real-time RIC may obtain the information about the network side and/or the terminal side from at least one of the CU, the DU, the RU, or the terminal device, and the information may be used as the training data or inference data. The inference result may be delivered to at least one of the CU, the DU, the RU, or the terminal device. Optionally, the CU and the DU may exchange the inference result. Optionally, the DU and the RU may exchange the inference result. For example, the non-real-time RIC delivers the inference result to the DU, and the DU forwards the inference result to the RU.

Optionally, as shown in FIG. 3C, in another possible implementation, the access network device includes the near-real-time RIC, and there is a non-real-time RIC outside the access network device (optionally, the non-real-time RIC may be located in the OAM, a cloud server, or the core network device). Same as that in the foregoing second possible implementation, the non-real-time RIC may be configured to perform model training and inference. In addition/Alternatively, same as that in the foregoing first possible implementation, the near-real-time RIC may be configured to perform model training and inference. In addition/Alternatively, the non-real-time RIC performs model training, and the near-real-time RIC may obtain AI model information from the non-real-time RIC, obtain the information about the network side and/or the terminal side from at least one of the CU, the DU, the RU, or the terminal device, and obtain the inference result based on the information and the AI model information. Optionally, the near-real-time RIC may deliver the inference result to at least one of the CU, the DU, the RU, or the terminal device. Optionally, the CU and the DU may exchange the inference result. Optionally, the DU and the RU may exchange the inference result. For example, the near-real-time RIC delivers the inference result to the DU, and the DU forwards the inference result to the RU. For example, the near-real-time RIC is configured to train a model A and use the model A for inference. For example, the non-real-time RIC is configured to train a model B and use the model B for inference. For example, the non-real-time RIC is configured to train a model C and send information about the model C to the near-real-time RIC, and the near-real-time RIC uses the model C for inference.

In this disclosure, one model may obtain one output through inference, and the output includes one or more parameters. Learning processes or training processes of different models may be deployed in different devices or nodes, or may be deployed in a same device or node. Inference processes of different models may be deployed in different devices or nodes, or may be deployed in a same device or node. This is not limited in this disclosure.

In this disclosure, an involved network element may perform a part or all of steps or operations related to the network element. These steps or operations are merely examples. In this disclosure, other operations or variants of various operations may be further performed. In addition, the steps may be performed in a sequence different from a sequence presented in this disclosure, and not all the operations in this disclosure may be performed.

In examples of this disclosure, unless otherwise stated or there is a logic conflict, terms and/or descriptions in different examples may be mutually referenced, and technical features in different examples may be combined based on an internal logical relationship thereof, to form a new example.

In this disclosure, "at least one (item)" may also be described as "one or more (items)", and "a plurality of (items)" may be two (items), three (items), four (items), or more (items). This is not limited. "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing technical solutions of this disclosure, words such as "first", "second", "A", or "B" may be used to distinguish technical features with same or similar functions. The word like "first", "second", "A", or "B" does not limit a quantity and an execution sequence. In addition, the word like "first", "second", "A", or "B" does not limit a definite difference. A word like "example" or "for example" is used to represent an example, an evidence, or a description. Any design solution described as "example" or "for example" should not be explained as being more preferred or having more advantages than another design solution. The word like "example" or "for example" is intended to present a related concept in a specific manner for ease of understanding.

A network architecture and a service scenario described in this disclosure are intended to describe the technical solutions in this disclosure more clearly, and do not constitute a limitation on the technical solutions provided in this disclosure. A person of ordinary skill in the art may know that, with evolution of the network architecture and emergence of a new service scenario, the technical solutions provided in this disclosure are also applicable to similar technical problems.

As described above, in a communication system that supports a multi-antenna technology, signal transmission quality may be improved by using a beamforming technology. When sending a signal to the terminal device, the access network device may perform beamforming on an access network device side. To be specific, the access network device aligns a beamforming direction of a transmit beam of the signal with an emergent angle of a main path of a channel, so that the terminal device can obtain most signal transmission energy. Optionally, if the terminal device also supports the multi-antenna technology, the terminal device may also perform beamforming. To be specific, the terminal device aligns a beamforming direction of a receive beam of the signal with an incident angle of the main path of the channel. For another example, when receiving a signal from the terminal device, the access network device may perform beamforming on an access network device side. The access network device aligns a beamforming direction of a receive beam of the signal with an incident angle of a main path of a channel, so that the access network device can obtain most signal transmission energy. Optionally, if the terminal device also supports the multi-antenna technology, the terminal device may also perform beamforming. The terminal device may align a beamforming direction of a transmit beam of the signal with an emergent angle of the main path of the channel. By using the beamforming technology, signal transmission can be completed with high quality, and signal energy received by a receiver can be improved.

To implement a transmitter beamforming technology, a signal transmitter may use a precoding technology, so that a sent signal has a beamforming effect. Similarly, to implement a receiver beamforming technology, a signal receiver may use a precoding technology, so that a received signal has a beamforming effect. For example, a signal propagation model may be expressed as: $Y=V*H*W*X+N$ (Formula 1).

N is noise, X is a transmit signal, and W is a transmitter precoding matrix. A signal obtained by precoding X by using W is $W*X$. $W*X$ is a final transmit signal of the transmitter. $W*X$ has a beamforming effect in space. A signal that arrives at the receiver after channel propagation is $H*W*X$. V is a receiver precoding matrix. A signal obtained by precoding $H*W*X$ by using V is $V*H*W*X$. $V*H*W*X+N$ is a final receive signal of the receiver, and $V*H*W*X$ has a beamforming effect in space. A data form of a precoding matrix is usually a complex number, and another data form is not excluded in this disclosure. In this disclosure, the precoding matrix may also be referred to as a codebook, and one precoding matrix corresponds to one codebook.

In the foregoing beamforming technology, W corresponds to a transmit beam of the transmitter, and V corresponds to a receive beam of the receiver. Angles of different main paths of the channel may be distributed in a wide range, for example, a horizontal range of 0 to 360 degrees and a vertical range of -90 to 90 degrees. However, one beam corresponding to one precoding matrix may cover only a limited angle range in space. Therefore, a plurality of precoding matrices may be supported in a system to support a plurality of beams, to ensure a good signal coverage effect. A process of determining W and/or V in a multi-beam system may be referred to as a beam management process, or it is described as that a process of determining a beam corresponding to W and/or a beam corresponding to V may be referred to as a beam management process. It is assumed that the transmitter has T candidate beams in total, in other words, the transmitter has T candidate precoding matrices W in total, respectively denoted as $W_i$, where a value of i ranges from 0 to T-1; and the receiver has R candidate beams in total, in other words, the receiver has R candidate precoding matrices V, respectively denoted as $V_j$, where a value of j ranges from 0 to R-1. T is a positive integer, for example, a multiple of 2 or a power of 2 like 4, 8, 16, 32, or 64. Alternatively, a value of T is another possible integer like 5, 6, 10, or 12. This is not limited. R is a positive integer like 1, 2, or 4. In the beam management process, top W and V for communication between the transmitter and the receiver are determined, that is, a top beam pair is determined, from the T precoding matrices $W_i$ and the R precoding matrices $V_j$. In this process, the top beam pair may be determined through T*R rounds of beam polling. The T*R rounds of beam polling may be performed in a time division manner.

For example, in an $e^{th}$ round of beam polling, the transmitter sends a reference signal to the receiver device by using an $i^{th}$ beam, and the receiver receives the reference signal by using a $j^{th}$ beam. The receiver receives the reference signal $Y_i$, where $Y_i=V_j*H*W_i*X+N$ (Formula 2).

X is the reference signal sent by the transmitter, $W_i$ is a transmitter precoding matrix, H is a channel response, $V_j$ is a receiver precoding matrix, and N is noise. $e=i*R+j$ (corresponding to first polling a receiver beam and then polling a transmitter beam), or $e=j*T+i$ (corresponding to first polling a transmitter beam and then polling a receiver beam), where a value of e ranges from 0 to T*R-1. After receiving the reference signal $Y_i$, the receiver may obtain an $e^{th}$ measurement quantity through estimation. Through T*R rounds of beam polling, the receiver may obtain T*R measurement quantities (or referred to as measurement values, estimated values, or the like) of the reference signal. In this disclosure, the measurement quantity of the reference signal is, for example, reference signal received power (reference signal received power, RSRP), a signal to interference plus noise ratio (signal to interference plus noise ratio, SINR), or another possible estimated value that is obtained through measurement. The receiver selects one measurement quantity with a top indicator from the T*R measurement quantities, and uses a beam corresponding to the measurement quantity as a top beam. The receiver sends, to the transmitter, an index of a transmitter beam (or an index of a precoding matrix) corresponding to the measurement quantity, and the transmitter may communicate with the receiver by using the beam (or the precoding matrix). In addition, the receiver may communicate with the transmitter by using a receiver beam corresponding to the measurement quantity.

In this disclosure, for different receivers such as terminal devices, T candidate beams of a transmitter like an access network device may be the same or may be different. In other words, in a cell, for different terminal devices, candidate beams used when the access network device communicates with the terminal devices may be the same or may be different. This is not limited in this disclosure. For one terminal device, T candidate beams that can be used by the access network device side to communicate with the terminal device may be referred to as a full beam of the terminal device. As described above, one beam corresponds to one precoding matrix, and an index of the beam may also be considered as an index of the precoding matrix.

In the method, the transmitter and the receiver are relative to the reference signal. For another signal, for example, a signal sent by the receiver to the transmitter, names of the receiver and the transmitter may be interchanged.

A type of the reference signal is not limited. A value of the reference signal is notified in advance to the receiver, so that the reference signal can be measured. For example, the value of the reference signal is agreed on in a protocol, or is notified in advance by the receiver to the transmitter. This is not limited.

For example, when the transmitter is an access network device and the receiver is a terminal device, the reference signal is a demodulation reference signal (demodulation reference signal, DMRS) of a physical downlink control channel (physical downlink control channel, PDCCH), a DMRS of a physical downlink shared channel (physical downlink shared channel, PDSCH), a channel state information reference signal (channel state information reference signal, CSI-RS), a synchronization signal (for example, a primary synchronization signal (primary synchronization signal, PSS) and/or a secondary synchronization signal (secondary synchronization signal, SSS)), a DMRS of a synchronization signal, a phase tracking reference signal (phase tracking reference signal, PTRS), or another possible downlink signal.

For example, when the transmitter is a terminal device and the receiver is an access network device, the reference signal is a DMRS of a physical uplink shared channel (physical uplink shared channel, PUSCH), a DMRS of a physical uplink control channel (physical uplink control channel, PUCCH), a random access preamble (preamble), a sounding reference signal (sounding reference signal, SRS), or another possible uplink signal.

In the foregoing method, a top beam of the transmitter may be obtained, through measurement, from the T candidate beams through T rounds of beam polling. A top beam of the receiver may be obtained, through measurement, from the R candidate beams through R rounds of beam polling. This sweeping process may be referred to as full beam sweeping, that is, each candidate beam is swept. In this process, the transmitter and the receiver implement angle alignment between the transmitter and the receiver by sweeping all codebooks in a traverse manner. For example, if 64 precoding matrices in codebooks of the transmitter respectively correspond to 64 beamformed beams, and four precoding matrices in codebooks of the receiver respectively correspond to four beamformed beams, a pair of top receiver and transmitter beamformed beams needs to be determined by sweeping for 256 times in total, and sweeping overheads and latency are very high.

For each transmitter beamformed beam, any receiver beamformed beam may form a transmit-receive beam pair with the transmitter beamformed beam. Therefore, a process of determining a top transmit-receive beam pair may be split into: performing receiver beam sweeping for a transmitter beam to determine a top receiver beam that matches the transmitter beam. Then, this process may be repeated for each of the remaining T-1 transmitter beams, to determine a global top transmit-receive beam pair. Similarly, for each receiver beam, any transmitter beam may form a transmit-receive beam pair with the receiver beam. Therefore, a process of determining a top transmit-receive beam pair may be split into: performing transmitter beam sweeping for a receiver beam to determine a top transmitter beam that matches the receiver beam. Then, this process may be repeated for each of the remaining R-1 receiver beams, to determine a global top transmit-receive beam pair. Because a principle of the receiver beam sweeping is similar to that of the transmitter beam sweeping, a beam management method provided in this disclosure may be described in this specification by using the transmitter beam sweeping as an example.

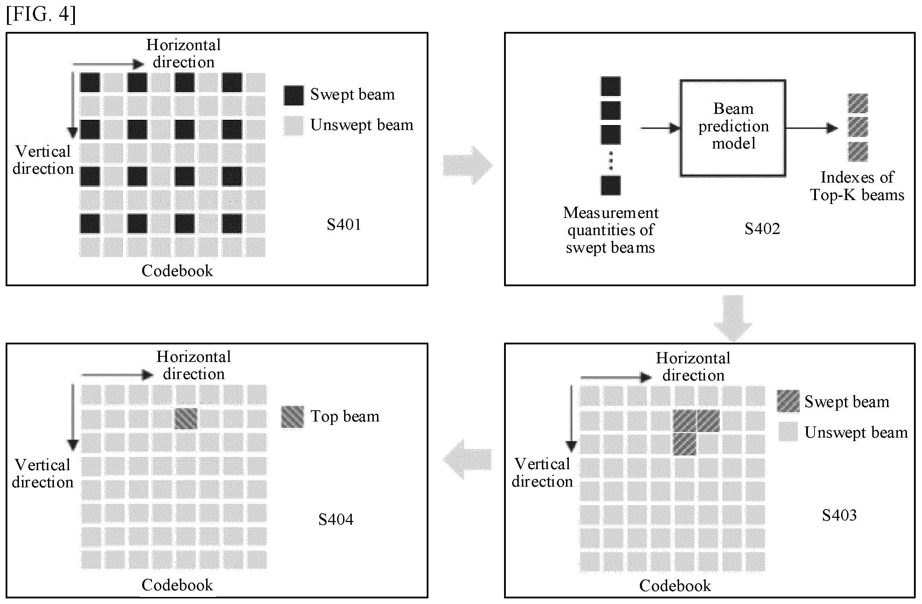

In the foregoing full beam sweeping method, each candidate beam is swept, which causes high system overheads and latency. To reduce the overheads, an AI technology is introduced into this disclosure, to implement beam management by using sparse beam sweeping and a beam prediction model. FIG. 4 shows an AI-based beam management method. By way of example, and not limitation, T=64 in FIG. 4. In practice, a value of the quantity T of candidate beams may alternatively be another possible value. This is not limited.

S401: A transmitter sweeps a sparse beam by using a sparse beam pattern.

As shown in the sparse beam pattern in S401, in the 64 candidate beams, the transmitter sweeps 16 of the beams in total. For a full beam, namely, the 64 beams, the 16 beams are equivalent to some sparse beams in the full beam. For ease of understanding, in S401, a horizontal direction and a vertical direction are used to present a spatial direction of each beam. In practice, beam division may be based on a two-dimensional plane direction, may be based on a three-dimensional space direction, or may be based on another possible manner. This is not limited.

In S401, similar to descriptions related to the foregoing Formula 1, the transmitter performs beam polling in a time division manner by using each beam in the 16 beams displayed in black boxes. The transmitter separately performs beamforming on reference signals by using 16 precoding matrices corresponding to the 16 beams, and sends beamformed reference signals to a receiver in a time division manner.

S402: The receiver receives the reference signals by using the sparse beam pattern, and performs beam prediction.

The receiver receives the reference signals corresponding to the 16 beams, and may obtain 16 measurement quantities in total. The 16 measurement quantities are referred to as measurement quantities corresponding to the sparse beam pattern in S401. The receiver inputs the 16 measurement quantities into a beam prediction model, and obtains Top-K (Top-K) beams in the full beam through inference. In other words, the receiver obtains indexes of the Top-K beams in the full beam including the 64 beams through prediction. K is a positive integer like 1, 3, 4, 6, 8, or another possible value. In S402, K=3, as shown by boxes filled with slashes.

The receiver may send, to the transmitter, the indexes of the K beams or indexes of K precoding matrices corresponding to the K beams. Optionally, the transmitter may communicate with the receiver by using any one beam in the K beams. Alternatively, when K is greater than 1, the transmitter may further determine a top beam from the K beams by using S403 and S404.

S403: The transmitter sweeps the Top-K beams.

K=3 is used as an example. Similar to the foregoing Formula 1, the transmitter polls reference signals by using each beam in the Top-3 beams displayed in the three boxes filled with slashes. To be specific, the transmitter separately performs beamforming on the reference signals by using three precoding matrices (codebooks) corresponding to the three beams, and sends beamformed reference signals to the receiver in a time division manner.

S404: The receiver determines the top beam.

The receiver receives three reference signals obtained through beamforming performed by using the Top-3 beams, and may obtain three measurement quantities in total. The receiver may determine a top measurement quantity in the three measurement quantities. A beam corresponding to the top measurement quantity is the top beam. The receiver may send an index of the top beam or an index of a precoding matrix corresponding to the top beam to the transmitter.

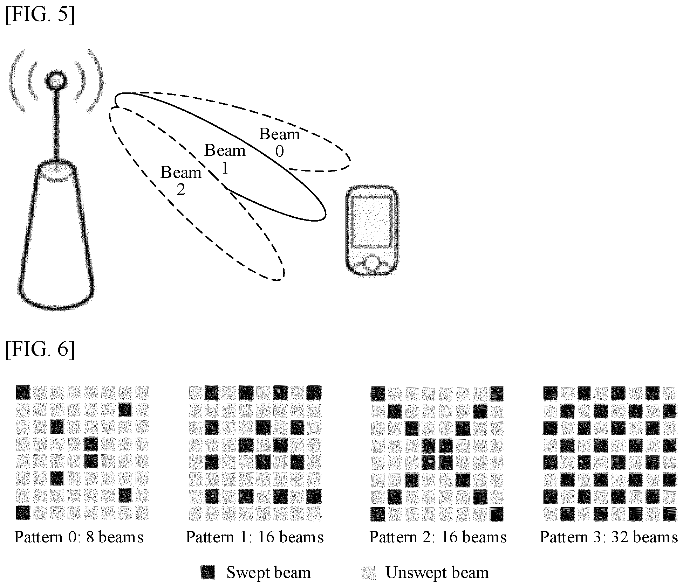

As shown in FIG. 5, an example in which a transmitter is an access network device and a receiver is a terminal device is used. It is assumed that Top-3 beams are a beam 0, a beam 1, and a beam 2. The access network device sweeps the three beams, and the terminal device may learn, through measurement, that a top beam is the beam 1.

After the top beam is determined, the transmitter and the receiver may perform data channel transmission by using the beam. For example, the access network device may send downlink data to the terminal device by using the top beam, for example, send a PDSCH; and/or the access network device may receive downlink data from the terminal device by using the top beam, for example, receive a PUSCH. In this disclosure, sending data of a data channel by using a beam may be understood as precoding the data by using a precoding matrix corresponding to the beam.

According to the AI model-based beam management method shown in FIG. 4, a quantity of times of beam polling may be reduced from 64 times of time division polling to 16 times of time division polling or 16+3=19 times of time division polling, so that system overheads can be reduced and latency can be reduced.

Performance of the foregoing beam prediction model during inference is related to a sparse beam pattern used when the beam prediction model is trained. For example, when the beam prediction model is trained, an input of the beam prediction model is determined by using a measurement quantity corresponding to a sparse beam pattern 1, so that a difference between Top-K results output by the beam prediction model and Top-K results obtained through full beam sweeping is less than a threshold. In this case, when inference is performed by using the beam prediction model obtained through training, a measurement quantity corresponding to a sparse beam pattern 2 may be input into the beam prediction model. In this case, the sparse beam pattern 2 does not correspond to or does not match the beam prediction model. An output result may be inaccurate, and even the measurement quantity corresponding to the sparse beam pattern 2 cannot be input into the model because an input dimension does not meet a requirement. For example, the sparse beam pattern 1 indicates that eight beams are swept, and the sparse beam pattern 2 indicates that 16 beams are swept.

In practice, a channel environment is complex and changeable. In different channel environments, different sparse beam patterns may be used, or even irregular sparse beam patterns may be used. Therefore, in practice, a dozen, dozens, or even hundreds of different sparse beam patterns need to be used. FIG. 6 shows four different sparse beam patterns of a full beam including 64 beams. When a full beam pattern is different or a system supports a plurality of full beam patterns, for example, when the full beam pattern includes 128 beams or the system supports a full beam pattern including 64 beams and a full beam pattern including 128 beams, there are more sparse beam patterns. Therefore, to meet an actual application requirement, one beam prediction model may need to be configured for each sparse beam pattern. In this case, a receiver needs to consume a large quantity of storage resources to store a plurality of beam prediction models, or needs to consume a large quantity of air interface resources to exchange the plurality of beam prediction models with a transmitter.

To reduce resource consumption, this disclosure proposes a beam management method. The method can reduce a quantity of beam prediction models in the system. In the method, an input adaptation layer (or referred to as an input adaptation model) and/or an output adaptation layer (or referred to as an output adaptation model) with a simple structure are/is introduced, so that a small quantity of beam prediction models can be used to support various requirements of the system, to reduce system overheads. The beam prediction model may be referred to as a reference beam prediction model or a basic beam prediction model. The small quantity is not limited. For example, the small quantity may be 2, 3, 5, 6, 8, or another possible value. This is not limited.

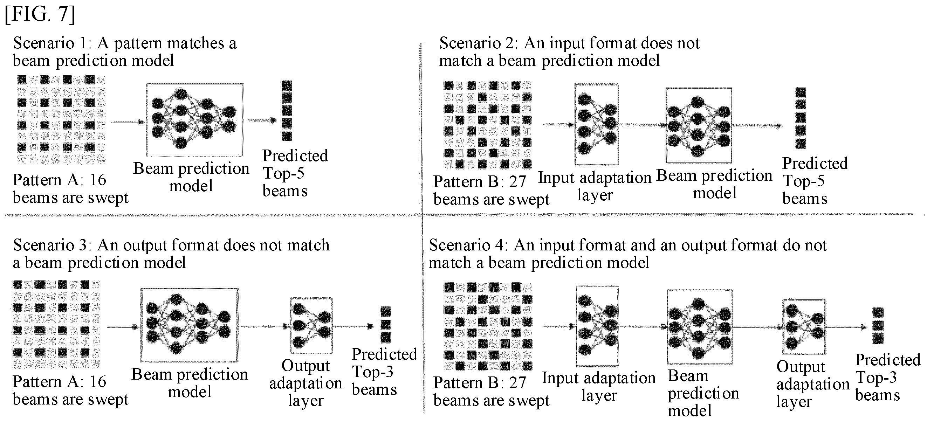

As shown in FIG. 7, methods provided in this disclosure are respectively described by using four scenarios.

Scenario 1: A sparse beam pattern matches a beam prediction model.

Similar to S401 and S402 in FIG. 4, a transmitter sends a reference signal by using a pattern A, and sweeps 16 beams in the pattern A in a time division manner. A receiver obtains indexes of Top-K1 beams in a full beam through prediction based on a reference signal measurement quantity and the beam prediction model. FIG. 7 shows an example in which the full beam includes 64 beams and K1=5. In other words, the sparse beam pattern matching the beam prediction model in FIG. 7 is the pattern A, and an output matching the beam prediction model is indexes of Top-5 beams in the full beam.

Scenario 2: A sparse beam pattern (an input format) does not match a beam prediction model.

A method corresponding to Scenario 2 may be described as: A receiver maps a reference signal measurement quantity to input adaptation information by using an input adaptation layer, where a beam pattern corresponding to the reference signal measurement quantity is a first beam pattern, the adaptation information corresponds to a second beam pattern, and the first beam pattern is different from the second beam pattern. The receiver obtains a first beam prediction result by using the beam prediction model, where an input of the beam prediction model includes the adaptation information. Alternatively, a method corresponding to Scenario 2 may be described as: A receiver maps a reference signal measurement quantity to input adaptation information by using an input adaptation layer, where a beam pattern corresponding to the reference signal measurement quantity is a first beam pattern. The receiver obtains a first beam prediction result by using the beam prediction model, where an input of the beam prediction model includes the adaptation information, the input of the beam prediction model matches a second beam pattern, and the first beam pattern is different from the second beam pattern.

In this disclosure, when it is described that the input of the model includes one or more features, for example, the input of the beam prediction model includes the reference signal measurement quantity or the input adaptation information, that the input of the model may further include another feature is not excluded.

Different from Scenario 1, in Scenario 2, a transmitter sends a reference signal by using a pattern B. However, a pattern A matches the beam prediction model. Therefore, after obtaining the reference signal measurement quantity corresponding to the pattern B, the transmitter maps the reference signal measurement quantity to the input adaptation information by using the input adaptation layer. The transmitter inputs the input adaptation information into the beam prediction model, and outputs indexes of Top-K1 beams in a full beam.

Scenario 3: An output format does not match a beam prediction model.

A method corresponding to Scenario 3 may be described as: A receiver inputs a reference signal measurement quantity into the beam prediction model, to obtain a first beam prediction result. The receiver maps the first beam prediction result to a second beam prediction result by using an output adaptation layer.

Different from Scenario 1, a beam prediction result required in Scenario 3 is indexes of Top-K2 beams, for example, indexes of Top-5 beams. However, a beam prediction result matching the beam prediction model is indexes of Top-K1 beams, for example, indexes of Top-3 beams. Therefore, after obtaining the indexes of the Top-5 beams through inference by using the beam prediction model, a transmitter maps the indexes of the Top-5 beams to the indexes of the Top-3 beams by using the output adaptation layer.

Scenario 4: A sparse beam pattern (an input format) and an output format do not match a beam prediction model.

Scenario 4 may be understood as a combination of Scenario 2 and Scenario 3. A method corresponding to Scenario 4 may be described as: A receiver maps a reference signal measurement quantity to input adaptation information by using an input adaptation layer, where a beam pattern corresponding to the reference signal measurement quantity is a first beam pattern, the adaptation information corresponds to a second beam pattern, and the first beam pattern is different from the second beam pattern. The receiver obtains a first beam prediction result by using the beam prediction model, where an input of the beam prediction model includes the adaptation information. The receiver maps the first beam prediction result to a second beam prediction result by using an output adaptation layer. Alternatively, a method corresponding to Scenario 4 may be further described as: A receiver maps a reference signal measurement quantity to input adaptation information by using an input adaptation layer, where a beam pattern corresponding to the reference signal measurement quantity is a first beam pattern. The receiver obtains a first beam prediction result by using the beam prediction model, where an input of the beam prediction model includes the adaptation information, the input of the beam prediction model matches a second beam pattern, and the first beam pattern is different from the second beam pattern. The receiver maps the first beam prediction result to a second beam prediction result by using an output adaptation layer.

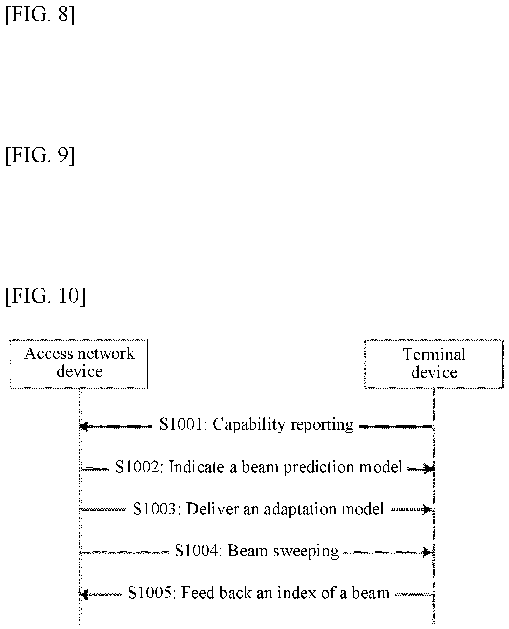

In this disclosure, the input adaptation layer is mainly configured to map the reference signal measurement quantity to being in an input format that matches the beam prediction model. A name of the input adaptation layer is not limited in this disclosure. For example, the input adaptation layer may also be referred to as an input adaptation model, a first model, or another name. A structure of the input adaptation layer is not limited in this disclosure. Optionally, the structure of the input adaptation layer is a neural network. For example, the input adaptation layer includes at least one of the following: one or more fully connected layers, one or more CNN layers, or one or more RNN layers. FIG. 8 shows a possible structure of an input adaptation layer. For example, an input dimension of the input adaptation layer may be represented as $[N_{in}, N_{sc}]$, and an output dimension of the input adaptation layer may be represented as $[N_{out}, N_{sc}]$, where $N_{in}$ is a quantity of beamformed beams in a sparse beam pattern before mapping, $N_{out}$ is a quantity of beamformed beams in a sparse beam pattern matching a beam prediction model, and $N_{sc}$ is a quantity of resources occupied by a reference signal, for example, a quantity of subcarriers or a quantity of resource elements (resource elements, REs). $N_{in}$, $N_{out}$, and $N_{sc}$ are positive integers. Values of $N_{in}$ and $N_{out}$ may be the same. For example, $N_{in}$ and $N_{out}$ respectively correspond to a pattern 1 and a pattern 2 shown in FIG. 6. Alternatively, values of $N_{in}$ and $N_{out}$ may be different. For example, $N_{in}$ and $N_{out}$ respectively correspond to a pattern 3 shown in FIG. 6 and the pattern A shown in FIG. 7. Optionally, when $N_{in}$ and $N_{out}$ respectively correspond to the pattern 3 shown in FIG. 6 and the pattern A shown in FIG. 7, because swept beams in the pattern 3 shown in FIG. 6 include swept beams in the pattern A shown in FIG. 7, the input adaptation layer may perform adaptation by performing a downsampling operation.

In this disclosure, the beam prediction model predicts a beam prediction result mainly based on a reference signal measurement quantity. The following uses an example in which the beam prediction result is a top beam in a full beam for description. As described above, for different terminal devices in a cell, full beam patterns may be the same, or may be different. This is not limited. For example, if the full beam patterns are cell-level information, the full beam patterns are the same for the different terminal devices in the cell. Alternatively, if the full beam patterns are terminal device-level information or terminal device group-level information, the full beam patterns may be different for the different terminal devices in the cell. In an extensible manner, the beam prediction model in this disclosure may further predict another type of result, and a principle is similar. For example, the beam prediction model may predict a top beam in a beam subset of a full beam, a top beam subset of a full beam, a beam whose corresponding measurement quantity is lower than a threshold in a full beam or a subset of the full beam, or a beam whose corresponding measurement quantity is higher than a threshold in a full beam or a subset of the full beam. This is not limited. A name of the beam prediction model is not limited in this disclosure. For example, the beam prediction model may also be referred to as a second model or another name.

In this disclosure, an output adaptation layer is mainly configured to map a first beam prediction result to a second beam prediction result, for example, map indexes of Top-K1 beams to indexes of Top-K2 beams. K1 and K2 are positive integers, and values of K1 and K2 are different. A name of the output adaptation layer is not limited in this disclosure. For example, the output adaptation layer may also be referred to as an output adaptation model, a third model, or another name. A structure of the output adaptation layer is not limited in this disclosure. Optionally, the structure of the output adaptation layer is a neural network. For example, the output adaptation layer includes at least one of the following: one or more fully connected layers, one or more CNN layers, or one or more RNN layers. FIG. 9 shows a possible structure of an output adaptation layer. An input of the output adaptation layer is a first beam prediction result, for example, indexes of Top-K1 beams, and an output of the output adaptation layer is a second beam prediction result, for example, indexes of Top-K2 beams.

FIG. 10 shows a specific beam prediction procedure according to this disclosure. The procedure is described by using an example in which a transmitter is an access network device and a receiver is a terminal device. When a quantity of antennas or antenna ports on a network side is far greater than that on a terminal side, a quantity of beamformed beams on the network side is also far greater than a quantity of beams on the terminal side. In this way, potential overheads and latency brought by performing sparse beam sweeping on the network side are reduced to a greater extent. It is clear that, as described above, in this disclosure, the transmitter may alternatively be a terminal device, and the receiver is an access network device, to perform beam management on a terminal device side.

Optionally, in S1001, the terminal device reports capability information to the access network device.

The terminal device may report the capability information to the access network device based on a query request of the access network device, or may actively report the capability information to the access network device when accessing a network. Specific time or a specific trigger event for reporting the capability information by the terminal device is not limited in this disclosure.

The terminal device may report at least one of the following capability information to the access network device:

> whether the terminal device supports running of a machine learning model or has an AI capability;
> a machine learning model type supported by the terminal device, for example, the terminal device may report that the terminal device supports at least one of the following machine learning models: a CNN, an RNN, a random forest model, or the like;
> a size of memory space that can be used by the terminal device to store the machine learning model;
> computing power information of the terminal device, indicating at least one of the following:

■ a calculation capability of the terminal device for running a model, for example, at least one of the following information of the terminal device: an operation speed of a processor, an amount of data that can be processed by the processor, or the like; or
■ energy consumption information of the terminal device, for example, at least one of the following of the terminal device: running power consumption of a chip or a battery capacity;

> hardware information of the terminal device, including but not limited to at least one of the following: antenna information (for example, a quantity of antennas and/or a polarization direction) or a radio frequency channel; and
> a beam prediction model stored in the terminal device.

When the terminal device supports running of the machine learning model or has the AI capability, the access network device may configure an AI model for the terminal device, to run a method in this disclosure. The access network device may configure an appropriate AI model for the terminal device based on the machine learning model type supported by the terminal device, the size of the memory space used to store the machine learning model, the computing power information, the hardware information, and the like. Based on the beam prediction model stored in the terminal device, the access network device may learn of the existing beam prediction model on the terminal device side, and/or may determine whether a new beam prediction model needs to be further configured for the terminal device, and the like.

S1001 is an optional step. For example, when a capability of the terminal device is agreed on in a protocol, the terminal device does not need to report the capability by using S1001. Alternatively, when the terminal device has previously reported a capability to the access network device and information about the capability is relatively fixed, in a specific beam prediction process, the terminal device may not need to report the capability again by using S1001.

Optionally, in S1002, the access network device sends information about a beam prediction model to the terminal device.

In a possible implementation, the beam prediction model of the terminal device is agreed on in the protocol. In this case, the access network device does not need to configure the beam prediction model for the terminal device by using S 1002. Optionally, for different terminal devices, beam prediction models agreed on in the protocol may be the same or may be different. This is not limited.

In a possible implementation, the access network device may send the information about the beam prediction model to the terminal device. The beam prediction model is used by the terminal device to predict a beam. The information indicates specific structure information of the beam prediction model. Optionally, beam prediction models configured by the access network device for different terminal devices may be the same or may be different. This is not limited.

In this disclosure, if a structure of the beam prediction model is a neural network, the information about the beam prediction model may include at least one of the following information: an index (or an identifier) of the model, a structure parameter of the model (for example, at least one of a quantity of neural network layers, a neural network width, a connection relationship between layers, a weight of a neuron, an activation function of the neuron, or an offset in an activation function), an input parameter of the model (for example, a type of the input parameter and/or a dimension of the input parameter), or an output parameter of the model (for example, a type of the output parameter and/or a dimension of the output parameter).

In this disclosure, the access network device may send information to the terminal device in a broadcast or multicast manner. This is not limited. Different information may be sent in a same manner or different manners. This is not limited.

In this disclosure, a model indicated by the access network device to the terminal device may be obtained by the access network device through training. For example, the model is obtained through training by using a near-real-time RIC, a CU, a DU, or another model in the access network device, or is downloaded by the access network device from a third-party website, or is obtained through training by using a non-real-time RIC and sent to the access network device, or is obtained through training by using OAM and sent to the access network device, or is obtained through training by using a core network device and sent to the access network device. This is not limited.

In a possible implementation, the access network device may indicate one model to the terminal device from a plurality of candidate beam prediction models. The plurality of candidate beam prediction models may also be referred to as a candidate beam prediction model set. For each model in the plurality of candidate beam prediction models, information about the model may be agreed on in the protocol, or may be sent by the access network device to the terminal device in advance by using signaling. This is not limited.

Method A1: A correspondence between E1 sparse beam patterns $\{F_1, F_2, ... F_{E1}\}$ and E2 candidate beam prediction models $\{S_1, S_2, ... S_{E2}\}$ may be configured. The correspondence may be agreed on in the protocol, or may be notified by the access network device to the terminal device in advance by using signaling. E1 and E2 are positive integers, and E2 is less than or equal to E1. For example, E1 is equal to E2, and $F_i$ corresponds to $S_i$, where a value of i ranges from 1 to E1. The E2 candidate beam prediction models may be referred to as reference beam prediction models, basic beam prediction models, or another name. This is not limited in this disclosure. Information about each beam prediction model in the E2 candidate beam prediction models may be agreed on in the protocol or notified by the access network device to the terminal device in advance by using signaling. Each beam prediction model corresponds to one index. One or more sparse beam patterns may correspond to one candidate beam prediction model. The terminal device may store the correspondence between $\{F_1, F_2, ... F_{E1}\}$ and $\{S_1, S_2, ... S_{E2}\}$ and $\{S_1, S_2, ... S_{E2}\}$. When indicating one model A to the terminal device from the E2 beam prediction models, the access network device may indicate an index or an identifier of the model A, or the access network device may indicate a sparse beam pattern A, where the pattern A is a pattern in $\{F_1, F_2, ... F_{E1}\}$. In this case, the terminal device can determine, based on the correspondence between $\{F_1, F_2, ... F_{E1}\}$ and $\{S_1, S_2, ... S_{E2}\}$, the model A corresponding to the pattern A.

Method A2: The access network device indicates, to the terminal device from a plurality of candidate beam prediction models, for example, E2 candidate beam prediction models $\{S_1, S_2, ... S_{E2}\}$, an index of the beam prediction model configured for the terminal device. As described in Table 1, there are five candidate beam prediction models, and each candidate beam prediction model corresponds to one index. The access network device may indicate one index to the terminal device from the five indexes, to indicate the model configured for the terminal device.

Table 1

| Candidate beam prediction model | Index |
|---|---|
| 1st model | 0 |
| 2nd model | 1 |
| 3rd model | 2 |
| 4th model | 3 |
| 5th model | 4 |

Optionally, in S1003, the access network device sends information about an adaptation layer to the terminal device.

When the access network device expects to perform beam management by using beam patterns in the foregoing $\{F_1, F_2, ... F_{E1}\}$, because these beam patterns have corresponding basic beam prediction models, an input adaptation layer is not needed. In this case, S1003 does not need to be performed to configure the input adaptation layer. Alternatively, when the access network device expects to perform beam management by using a beam pattern other than beam patterns in the foregoing $\{F_1, F_2, ... F_{E1}\}$, an input adaptation layer is needed. The access network device may send information about the input adaptation layer to the terminal device by using S1003. For example, the information about the input adaptation layer may be agreed on in the protocol. In this case, S1003 does not need to be performed. Alternatively, the access network device may send the information about the input adaptation layer to the terminal device. Alternatively, the access network device indicates one input adaptation layer to the terminal device from a plurality of candidate input adaptation layers. Information about each input adaptation layer in the plurality of candidate input adaptation layers may be agreed on in the protocol, or may be sent by the access network device to the terminal device in advance by using signaling. This is not limited.

When an output of the beam prediction model of the terminal device meets a requirement, an output adaptation layer is not needed for result adaptation. In this case, the output adaptation layer does not need to be configured by using S1003. When an output of the beam prediction model of the terminal device does not meet a requirement, information about an output adaptation layer may be agreed on in the protocol. In this case, S1003 does not need to be performed to configure the output adaptation layer. Alternatively, the access network device may send the information about the output adaptation layer to the terminal device. Alternatively, the access network device indicates one output adaptation layer to the terminal device from a plurality of candidate output adaptation layers. Information about each output adaptation layer in the plurality of candidate output adaptation layers may be agreed on in the protocol, or may be sent by the access network device to the terminal device in advance by using signaling. This is not limited.

The input adaptation layer and the output adaptation layer may be indicated by the access network device to the terminal device by using one message or two messages. This is not limited in this disclosure. Optionally, the input adaptation layer and the output adaptation layer may be sent by using two steps. For example, S1003 is split into S1003a and S1003b. S1003a is used to send the input adaptation layer, and S1003b is used to send the output adaptation layer.

Optionally, a structure of the input adaptation layer is a neural network, and the information about the input adaptation layer may include at least one of the following information: the index (or the identifier) of the model, the structure parameter of the model (for example, at least one of the quantity of neural network layers, the neural network width, the connection relationship between layers, the weight of the neuron, the activation function of the neuron, or the offset in the activation function), the input parameter of the model (for example, the type of the input parameter and/or the dimension of the input parameter), or the output parameter of the model (for example, the type of the output parameter and/or the dimension of the output parameter).

Optionally, a structure of the output adaptation layer is a neural network, and the information about the output adaptation layer may include at least one of the following information: the index (or the identifier) of the model, the structure parameter of the model (for example, at least one of the quantity of neural network layers, the neural network width, the connection relationship between layers, the weight of the neuron, the activation function of the neuron, or the offset in the activation function), the input parameter of the model (for example, the type of the input parameter and/or the dimension of the input parameter), or the output parameter of the model (for example, the type of the output parameter and/or the dimension of the output parameter).

S1004: The access network device sweeps a beam.

Possible scenario 1:

The access network device sends a reference signal to the terminal device by using a second beam pattern. The terminal device receives the reference signal based on the second beam pattern, and estimates a measurement quantity of the reference signal. The terminal device may predict indexes of Top-K1 beams by using the beam prediction model configured by the access network device for the terminal device in S1002 and by using the method in Scenario 1 shown in FIG. 7. In this case, the second beam pattern is a pattern that matches the beam prediction model of the terminal device, and a required beam prediction result matches an output result of the beam prediction model.

Optionally, an index of the second beam pattern or an index of a precoding matrix (codebook) corresponding to the second beam pattern may be agreed on in the protocol or configured by the access network device for the terminal device by using signaling. Based on the configuration, the terminal device may determine the second beam pattern. The terminal device receives the reference signal based on the second beam pattern.

If the access network device configures the beam prediction model for the terminal device by using Method A1 in S1002 and the second beam pattern is a beam pattern in $\{F_1, F_2, ... F_{E1}\}$, the terminal device may determine the beam prediction model of the terminal device based on the second beam pattern and the correspondence between the E1 sparse beam patterns $\{F_1, F_2, ... F_{E1}\}$ and the E2 candidate beam prediction models $\{S_1, S_2, ... S_{E2}\}$.

In this disclosure, the required beam prediction result may be agreed on in the protocol, determined by the terminal device (for example, determined based on a parameter like channel quality), or configured by the access network device for the terminal device. This is not limited.

Possible scenario 2:

The access network device sends a reference signal to the terminal device by using a first beam pattern. The terminal device receives the reference signal based on the first beam pattern, and estimates a measurement quantity of the reference signal. The terminal device may predict indexes of Top-K1 beams by using the beam prediction model configured by the access network device for the terminal device in S1002 and by using the method in Scenario 2 shown in FIG. 7. In this case, a second beam pattern is a pattern that matches the beam prediction model of the terminal device. The first beam pattern is different from the second beam pattern. The first beam pattern does not match the beam prediction model of the terminal device, but a required beam prediction result matches an output result of the beam prediction model.

Optionally, an index of the first beam pattern or an index of a precoding matrix (codebook) corresponding to the first beam pattern may be agreed on in the protocol or configured by the access network device for the terminal device by using signaling. Based on the configuration, the terminal device may determine the first beam pattern. The terminal device receives the reference signal based on the first beam pattern.

For configuring the beam prediction model for the terminal device, refer to the foregoing possible scenario 1. Details are not described herein again.

Possible scenario 3:

Different from the foregoing possible scenario 1, in the possible scenario 3, a required beam prediction result does not match an output result of the beam prediction model. In this case, the terminal device maps indexes of Top-K1 beams to indexes of Top-K2 beams by using the output adaptation layer and by using the method shown in Scenario 3 in FIG. 7.

For a second beam pattern and for configuring the beam prediction model for the terminal device, refer to the foregoing possible scenario 1. Details are not described herein again.

Possible scenario 4:

Different from the foregoing possible scenario 2, in the possible scenario 4, a required beam prediction result does not match an output result of the beam prediction model. In this case, the terminal device maps indexes of Top-K1 beams to indexes of Top-K2 beams by using the output adaptation layer and by using the method shown in Scenario 4 in FIG. 7.

For a first beam pattern and for configuring the input adaptation layer for the terminal device, refer to the foregoing possible scenario 2. Details are not described herein again. For configuring the output adaptation layer for the terminal device, refer to the foregoing possible scenario 3. Details are not described herein again.

S1005: The terminal device feeds back an index of the beam.

The terminal device reports, to the access network device, a beam prediction result obtained in S1003 meeting the requirement.

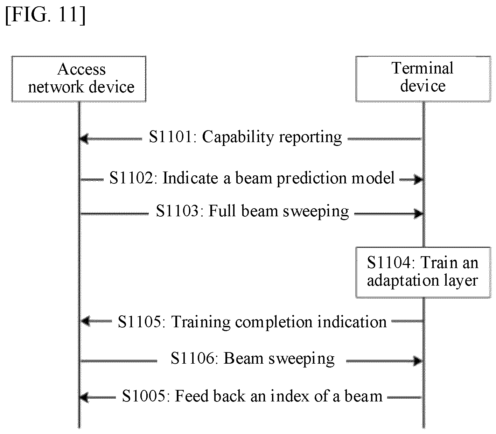

FIG. 11 shows another specific beam prediction procedure according to this disclosure. In the procedure shown in FIG. 10, the adaptation layer is indicated by the access network device to the terminal device. However, in the procedure shown in FIG. 11, an adaptation layer is obtained by a terminal device through training.

Optionally, in S1101, the terminal device reports capability information to an access network device.

Same as S1001.

Optionally, in S1102, the access network device sends information about a beam prediction model to the terminal device.

Same as S1002.

Optionally, in S1103, the access network device sweeps a full beam. Optionally, in S1104, the terminal device trains the adaptation layer.

Possible scenario 1:

Similar to the possible scenario 1 in S1004, if the access network device prepares to communicate with the terminal device by using a second beam pattern, where the second beam pattern is a pattern that matches the beam prediction model of the terminal device, and if a required beam prediction result matches an output result of the beam prediction model, S1103 and S1104 do not need to be performed.

A method for configuring the second beam pattern is the same as that in the scenario 1 in S1004. Details are not described herein again.

Possible scenario 2:

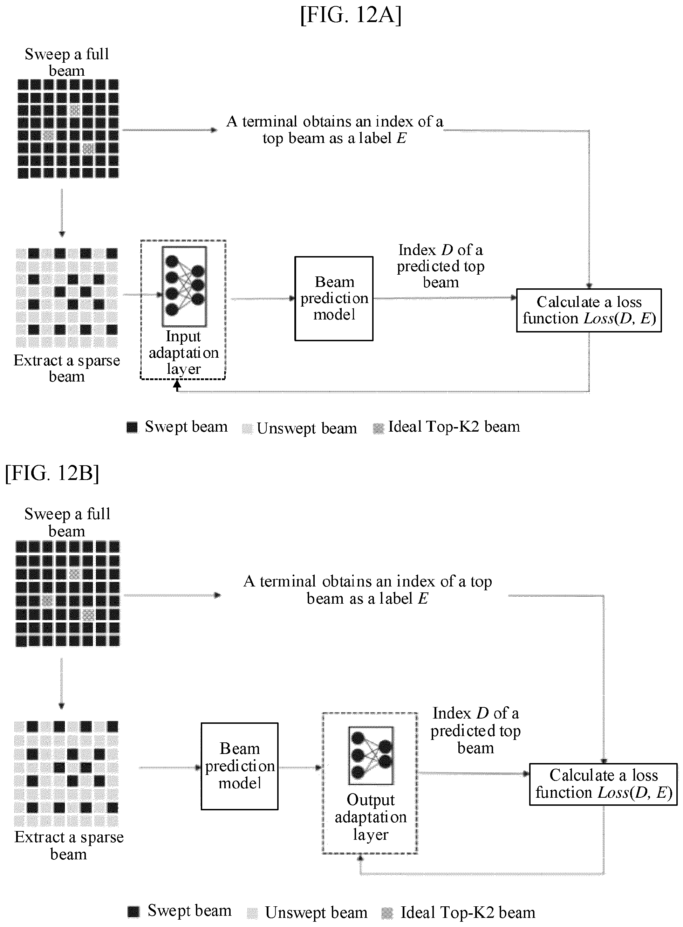

Similar to the possible scenario 2 in S1004, it is assumed that the access network device prepares to communicate with the terminal device by using a first beam pattern. A second beam pattern matches the beam prediction model of the terminal device, and the first beam pattern does not match the beam prediction model of the terminal device, but a required beam prediction result matches an output result of the beam prediction model. A method for configuring the first beam pattern is the same as that in the scenario 2 in S1003. Details are not described herein again. In this case, the terminal device may obtain an input adaptation layer through training by using a method shown in FIG. 12A.

As shown in FIG. 12A, the access network device performs full beam sweeping by using S1103.

The terminal device trains the input adaptation layer by using S1104.

Operation 1: The terminal device obtains an ideal beam prediction result based on a measurement quantity corresponding to a full beam.

The terminal device receives a reference signal based on a full beam (T beams in total) pattern, and estimates T first measurement quantities of the reference signal. The terminal device may obtain Top-K1 first measurement quantities in the T first measurement quantities, and use K1 beams corresponding to the T first measurement quantities as ideal Top-K1 beams.

Operation 2: The terminal device maps a measurement quantity corresponding to a sparse beam of the first beam pattern to input adaptation information by using the input adaptation layer, and obtains an actual beam prediction result based on the input adaptation information and the beam prediction model.

The terminal device may extract, based on T second measurement quantities corresponding to a full beam, the full beam pattern, and a sparse beam pattern, t second measurement quantities corresponding to the sparse beam pattern from the T second measurement quantities, where t is a quantity of beams that need to be swept in the sparse beam pattern. Alternatively, the terminal device obtains, based on the full beam pattern and a sparse beam pattern, t second measurement quantities corresponding to the sparse beam through estimation. A type of the first measurement quantity and a type of the second measurement quantity may be the same or may be different. For example, the first measurement quantity and the second measurement quantity may be RSRP, an SINR, estimated channel state information (CSI), or another possible measurement quantity. This is not limited. For example, both the first measurement quantity and the second measurement quantity are RSRP or CSI, or one is RSRP and the other is CSI. The terminal device uses the t second measurement quantities as an input of the input adaptation layer, similar to Scenario 2 in FIG. 7, to obtain the input adaptation information. Then, the beam prediction model obtains indexes of Top-K1 beams based on the input adaptation information.

Operation 3: The terminal device trains the input adaptation layer based on the ideal beam prediction result and the actual beam prediction result. To be specific, the terminal device adjusts a parameter of the input adaptation layer based on the ideal beam prediction result and the actual beam prediction result, to enable a difference between the ideal beam prediction result and the actual beam prediction result to be less than a threshold.

The terminal device calculates a loss function based on indexes of the ideal Top-K1 beams that are obtained through measurement and the indexes of the Top-K1 beams output by the beam prediction model. If the loss function meets a requirement, for example, the loss function indicates that a difference between the indexes (labels) of the ideal Top-K1 beams and the indexes of the Top-K1 beams output by the beam prediction model is less than (or less than or equal to) the threshold, it is considered that training of the input adaptation layer is completed, a training process ends, and the input adaptation layer is used as an input adaptation layer that is actually used to predict a beam subsequently. If the loss function does not meet a requirement, the model parameter of the input adaptation layer is updated, and the foregoing Operation 2 is performed.

Initial model information of the input adaptation layer may be agreed on in a protocol, or may be indicated by the access network device to the terminal device. This is not limited.

Possible scenario 3:

Similar to the possible scenario 3 in S1004, it is assumed that the access network device prepares to send a reference signal to the terminal device by using a second beam pattern. The second beam pattern matches the beam prediction model of the terminal device, but a required beam prediction result matches an output result of the beam prediction model. A method for configuring the second beam pattern is the same as that in the scenario 3 in S1004. Details are not described herein again. In this case, the terminal device may obtain an input adaptation layer through training by using a method shown in FIG. 12B.

As shown in FIG. 12B, the access network device performs full beam sweeping by using S1103.

The terminal device trains the output adaptation layer by using S1104.

Operation 1: The terminal device obtains an ideal beam prediction result based on a measurement quantity corresponding to a full beam.

The terminal device receives the reference signal based on a full beam (T beams in total) pattern, and estimates T first measurement quantities of the reference signal. The terminal device may obtain Top-K2 first measurement quantities in the T first measurement quantities, and use K2 beams corresponding to the T first measurement quantities as ideal Top-K2 beams. Descriptions of the first measurement quantity and the second measurement quantity are the same as those in FIG. 12A. Details are not described herein again.

Operation 2: The terminal device obtains a first beam prediction result based on a measurement quantity corresponding to a sparse beam of the second beam pattern and the beam prediction model, and maps the first beam prediction result to an actual beam prediction result by using the output adaptation layer.

The terminal device may extract, based on T second measurement quantities corresponding to a full beam, the full beam pattern, and a sparse beam pattern, t second measurement quantities corresponding to the sparse beam pattern from the T second measurement quantities, where t is a quantity of beams that need to be swept in the sparse beam pattern. Alternatively, the terminal device obtains, based on the full beam pattern and a sparse beam pattern, t second measurement quantities corresponding to the sparse beam through estimation. The terminal device inputs the t second measurement quantities into the beam prediction model, to obtain indexes of Top-K1 beams. The terminal device inputs the indexes of the Top-K1 beams into the output adaptation layer, to obtain indexes of Top-K2 beams.

Operation 3: The terminal device trains the output adaptation layer based on the ideal beam prediction result and the actual beam prediction result. To be specific, the terminal device adjusts a parameter of the output adaptation layer based on the ideal beam prediction result and the actual beam prediction result, to enable a difference between the ideal beam prediction result and the actual beam prediction result to be less than a threshold.

The terminal device calculates a loss function based on indexes of the ideal Top-K2 beams that are obtained through measurement and the indexes of the Top-K2 beams output by the output adaptation layer. If the loss function meets a requirement, for example, the loss function indicates that a difference between the indexes (labels) of the ideal Top-K2 beams and the indexes of the Top-K2 beams output by the beam prediction model is less than (or less than or equal to) the threshold, it is considered that training of the output adaptation layer has been completed, a training process ends, and the output adaptation layer is used as an output adaptation layer that is actually used to predict a beam subsequently. If the loss function does not meet a requirement, the model parameter of the output adaptation layer is updated, and the foregoing Operation 2 is performed.

Initial model information of the output adaptation layer may be agreed on in a protocol, or may be indicated by the access network device to the terminal device. This is not limited.

Possible scenario 4:

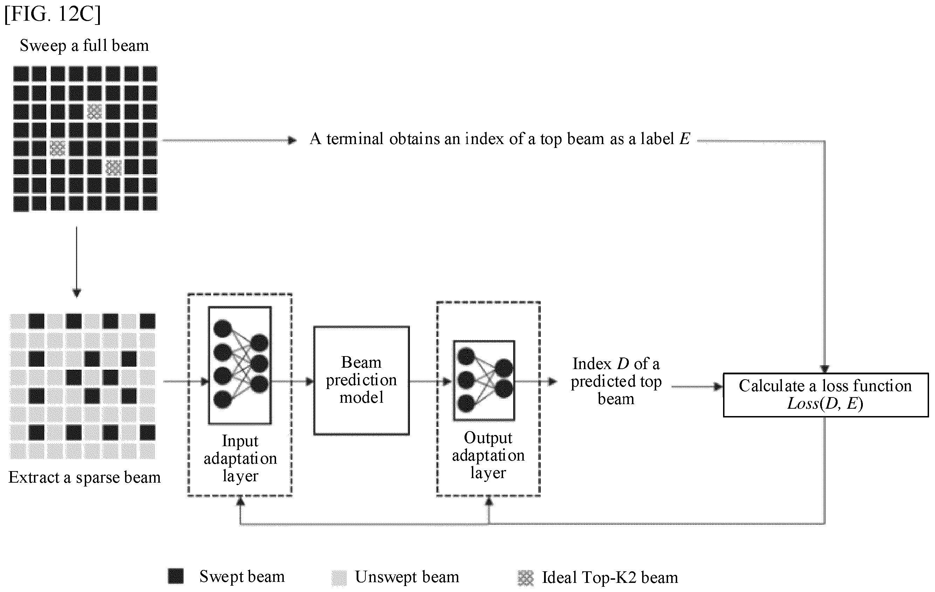

Similar to the possible scenario 4 in S1004, the access network device prepares to send a reference signal to the terminal device by using a first beam pattern. The first beam pattern does not match the beam prediction model of the terminal device, and a required beam prediction result matches an output result of the beam prediction model. A method for configuring the first beam pattern is the same as that in the scenario 4 in S1004. Details are not described herein again. In this case, the terminal device may obtain an input adaptation layer through training by using a method shown in FIG. 12C.

As shown in FIG. 12C, the access network device performs full beam sweeping by using S1103.

The terminal device trains the input adaptation layer and/or the output adaptation layer by using S1104.

Operation 1: The terminal device obtains an ideal beam prediction result based on a measurement quantity corresponding to a full beam.

The terminal device receives the reference signal based on a full beam (T beams in total) pattern, and estimates T first measurement quantities of the reference signal. The terminal device may obtain Top-K2 first measurement quantities in the T first measurement quantities, and use K2 beams corresponding to the K2 first measurement quantities as ideal Top-K2 beams. Descriptions of the first measurement quantity and the second measurement quantity are the same as those in 12A. Details are not described herein again.

Operation 2: The terminal device maps a measurement quantity corresponding to a sparse beam of the first beam pattern to input adaptation information by using the input adaptation information, obtains a first beam prediction result based on the input adaptation information and the beam prediction model, and maps the first beam prediction result to an actual beam prediction result by using the output adaptation layer.

The terminal device may extract, based on T second measurement quantities corresponding to a full beam, the full beam pattern, and a sparse beam pattern, t measurement quantities corresponding to the sparse beam pattern from the T second measurement quantities, where t is a quantity of beams that need to be swept in the sparse beam pattern. Alternatively, the terminal device obtains, based on the full beam pattern and a sparse beam pattern, t second measurement quantities corresponding to the sparse beam through estimation. The terminal device uses the t measurement quantities as an input of the input adaptation layer, to obtain the input adaptation information. Then, the beam prediction model obtains indexes of Top-K1 beams based on the input adaptation information. The terminal device inputs the indexes of the Top-K1 beams into the output adaptation layer, to obtain indexes of Top-K2 beams.

Operation 3: The terminal device trains the input adaptation layer and/or the output adaptation layer based on the ideal beam prediction result and the actual prediction result.

The terminal device calculates a loss function based on indexes of the ideal Top-K2 beams obtained through measurement and the indexes of the Top-K2 beams output by the beam prediction model. If the loss function meets a requirement, for example, the loss function indicates that a difference between the indexes (labels) of the ideal Top-K2 beams and the indexes of the Top-K2 beams output by the beam prediction model is less than (or less than or equal to) the threshold, it is considered that training of the input adaptation layer and the output adaptation layer is completed, a training process ends, and the input adaptation layer is used as an input adaptation layer that is actually used to predict a beam subsequently. If the loss function does not meet a requirement, the model parameter of the input adaptation layer and/or the output adaptation layer is updated, and the foregoing Operation 2 is performed. Updating the parameter of the input adaptation layer, updating the parameter of the output adaptation layer, or updating both the parameter of the input adaptation layer and the parameter of the output adaptation layer may cause a value of the loss function in the training process to decrease. Therefore, in a round of training, one or both of the parameter of the input adaptation layer and the parameter of the output adaptation layer may be updated, and then Operation 2 is performed.

Optionally, in S1105, the terminal device sends a training completion indication to the access network device.

Based on the indication, the access network device may learn that the terminal device has completed training, and beam management may be performed by using the trained input adaptation layer and/or output adaptation layer. This step is optional. For example, if a time period in which the terminal device completes training is agreed on in the protocol or the access network device indicates a time period in which the terminal device completes training, S1105 does not need to be performed.

Optionally, in S1106, the access network device sweeps a beam. Optionally, in S1107, the terminal device feeds back an index of the beam.

Similar to S1004 and S1005, the access network device and the terminal device may perform sparse beam sweeping, and the terminal device feeds back the index of the beam. A manner of determining the input adaptation layer and the output adaptation layer used in S1004 and S1005 is different from a manner of determining the input adaptation layer and the output adaptation layer used in S1106 and S1107.

It may be understood that, to implement functions in the foregoing methods, the access network device, the module of the access network device, the terminal device, the AI function network element, and the like include corresponding hardware structures and/or software modules for performing the functions. A person skilled in the art should be easily aware that, with reference to units and method steps in the examples described in this disclosure, this disclosure can be implemented by hardware or a combination of hardware and computer software. Whether a function is performed by hardware or hardware driven by computer software depends on particular application scenarios and design constraints of the technical solutions.

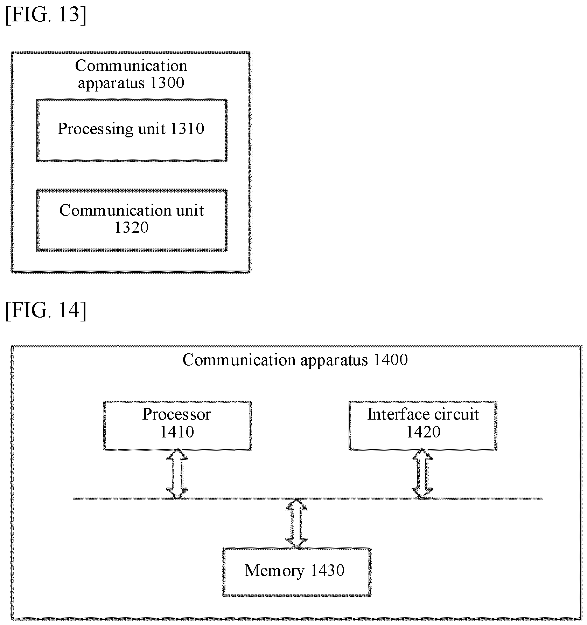

FIG. 13 and FIG. 14 each are a diagram of a structure of a possible communication apparatus according to this disclosure. These communication apparatuses may be configured to implement functions of the access network device, the module (for example, the DU, the RU, and/or the near-real-time RIC) of the access network device, the terminal device, the AI function network element, and the like in the foregoing methods. Therefore, these communication apparatuses may also implement beneficial effects of the foregoing methods.

As shown in FIG. 13, a communication apparatus 1300 includes a processing unit 1310 and a communication unit 1320. The communication apparatus 1300 is configured to implement the methods shown above.

When the communication apparatus 1300 is configured to implement a method performed by a reference signal receiver, the processing unit 1310 maps a reference signal measurement quantity to input adaptation information by using an input adaptation layer, where a beam pattern corresponding to the reference signal measurement quantity is a first beam pattern. The processing unit 1310 obtains a first beam prediction result by using a beam prediction model, where an input of the beam prediction model includes the adaptation information, the input of the beam prediction model matches a second beam pattern, and the first beam pattern is different from the second beam pattern. A reference signal is received by the communication unit 1320.

Alternatively, when the communication apparatus 1300 is configured to implement a method performed by a reference signal receiver, the processing unit 1310 obtains a first beam prediction result by using a beam prediction model, where an input to the beam prediction model includes a reference signal measurement quantity, and a beam pattern corresponding to the reference signal measurement quantity is a second beam pattern. The processing unit 1310 maps the first beam prediction result to a second beam prediction result by using an output adaptation layer. A reference signal is received by the communication unit 1320.

Alternatively, when the communication apparatus 1300 is configured to implement a method performed by a reference signal receiver, the processing unit 1310 maps a reference signal measurement quantity to input adaptation information by using an input adaptation layer, where a beam pattern corresponding to the reference signal measurement quantity is a first beam pattern. The processing unit 1310 obtains a first beam prediction result by using a beam prediction model, where an input of the beam prediction model includes the input adaptation information, the input of the beam prediction model matches a second beam pattern, and the first beam pattern is different from the second beam pattern. The processing unit 1310 maps the first beam prediction result to a second beam prediction result by using an output adaptation layer. A reference signal is received by the communication unit 1320.

When the communication apparatus 1300 is configured to implement a method performed by a reference signal transmitter, the communication unit 1320 is configured to send information about an input adaptation layer, where the input adaptation layer is configured to adapt a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern. The information about the input adaptation layer is determined by the processing unit 1310.

Alternatively, when the communication apparatus 1300 is configured to implement a method performed by a reference signal transmitter, the communication unit 1320 is configured to send information about an output adaptation layer, where the output adaptation layer is configured to map, to a second beam prediction result, a first beam prediction result output by a beam prediction model, and the first beam prediction result is different from the second beam prediction result. The information about the output adaptation layer is determined by the processing unit 1310.

Alternatively, when the communication apparatus 1300 is configured to implement a method performed by a reference signal transmitter, the communication unit 1320 is configured to send information about an input adaptation layer and information about an output adaptation layer. The input adaptation layer is configured to adapt a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern. The output adaptation layer is configured to map a first beam prediction result output by the beam prediction model to a second beam prediction result, where the first beam prediction result is different from the second beam prediction result. The information about the input adaptation layer and the information about the output adaptation layer are determined by the processing unit 1310.

For more detailed function descriptions of the processing unit 1310 and the communication unit 1320, refer to related descriptions in the foregoing methods. Details are not described herein again.

As shown in FIG. 14, a communication apparatus 1400 includes a processor 1410 and an interface circuit 1420, configured to implement the methods performed by the transmitter or the receiver described above. The processor 1410 and the interface circuit 1420 are coupled to each other. It may be understood that the interface circuit 1420 may be a transceiver, a pin, an input/output interface, or another communication interface. Optionally, the communication apparatus 1400 may further include a memory 1430, configured to store at least one of the following: instructions executed by the processor 1410, input data needed by the processor 1410 to run the instructions, or data generated after the processor 1410 runs the instructions.

Optionally, the instructions run by the processor 1410 may be stored in the processor 1410, stored in the memory 1430, and/or downloaded by the processor 1410 from a third-party website. A method for obtaining the instructions is not limited in this disclosure. The instructions in the memory 1430 may be pre-stored, may be subsequently loaded, or may be downloaded by the processor 1410 from a third-party website and then stored in the memory 1430.

When the communication apparatus 1400 is configured to implement the foregoing methods, the processor 1410 is configured to implement a function of the foregoing processing unit 1310, and the interface circuit 1420 is configured to implement a function of the foregoing communication unit 1320.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by an access network device and the like to the terminal device. Alternatively, the chip in the terminal device sends information to another module (for example, a radio frequency module or an antenna) in the terminal device, where the information is sent by the terminal device to an access network device and the like.

When the foregoing communication apparatus is a module used in an access network device, the module in the access network device implements a function of the access network device in the foregoing method embodiments. The module in the access network device receives information from another module (for example, a radio frequency module or an antenna) in the access network device, where the information is sent by a terminal device and the like to the access network device. Alternatively, the module in the access network device sends information to another module (for example, a radio frequency module or an antenna) in the access network device, where the information is sent by the access network device to a terminal device and the like. The module in the access network device herein may be a baseband chip of the access network device, or may be a near-real-time RIC, a CU, a DU, or another module. The near-real-time RIC, the CU, and the DU herein may be a near-real-time RIC, a CU, and a DU in an O-RAN architecture.

In this disclosure, the processor may include one or more processors, to serve as a combination of computing devices. The processor may be a general-purpose processor, a digital signal processor, an application-specific integrated circuit, a field programmable gate array, another programmable logic device, a discrete gate, a transistor logic device, a discrete hardware component, or the like, and is configured to implement or execute the methods, steps, and logical block diagrams in this disclosure. The general-purpose processor may be a microprocessor or any conventional processor or the like. The steps of the methods disclosed with reference to this disclosure may be directly performed and completed by a hardware processor, or may be performed and completed by using a combination of hardware in the processor and a software module.

In this disclosure, the interface circuit may include any suitable hardware or software for enabling communication with one or more computer devices (for example, a network element in this disclosure). For example, in some embodiments, the interface circuit may include a wire for coupling a wired connection, or a terminal and/or a pin of a wireless transceiver for coupling a wireless connection. In some embodiments, the interface circuit may include a transmitter, a receiver, a transceiver, and/or an antenna. The interface may be configured to enable communication between computer devices (for example, network elements in this disclosure) by using any available protocol (for example, the 3rd generation partnership project (3rd generation partnership project, 3GPP) standard protocol).

In this disclosure, the memory may be implemented by using any suitable storage technology. For example, the memory may be any available storage medium accessible by the processor and/or the computer. A non-limiting example of the storage medium is: a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, a compact disc memory, a magnetic storage medium, a magnetic storage device, a flash memory, a register, a state memory, a remotely installed memory, a local or remote memory component, or any other medium that can carry or store software, data, or information and can be accessed by a processor/computer.

The memory and the processor in this disclosure may be separately disposed, or may be integrated together. The processor may read information from the memory, and store and/or write information into the memory. The memory may be integrated into the processor. The processor and the memory may be disposed in an integrated circuit (for example, an application-specific integrated circuit (application-specific integrated circuit, ASIC)). The integrated circuit may be disposed in a network element or another network node in this disclosure.

The instruction in this disclosure may also be referred to as a program, and is software in a broad sense. The software may be program code, a program, a subprogram, an instruction set, code, a code segment, a software module, an application program, a software application program, or the like. The program may be run in a processor and/or a computer, to perform various functions and/or processes described in this disclosure.

All or a part of the methods in this disclosure may be implemented by software, hardware, firmware, or any combination thereof. When software is used to implement the methods, all or a part of the methods may be implemented in a form of a computer program product. The computer program product includes one or more computer programs or instructions. When the computer programs or the instructions are loaded and executed on a computer, all or a part of the procedures or the functions according to this application are executed. The computer may be a general-purpose computer, a dedicated computer, a computer network, an access network device, a terminal device, a core network device, an AI function network element, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

The foregoing descriptions are merely specific examples of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A beam management method, comprising:

   mapping a reference signal measurement quantity to input adaptation information by using an input adaptation layer, wherein a beam pattern corresponding to the reference signal measurement quantity is a first beam pattern; and obtaining a first beam prediction result by using a beam prediction model, wherein an input of the beam prediction model comprises the input adaptation information, the input of the beam prediction model matches a second beam pattern, and the first beam pattern is different from the second beam pattern.

2. A beam management method, comprising:

   obtaining a first beam prediction result by using a beam prediction model, wherein an input of the beam prediction model comprises a reference signal measurement quantity, and a beam pattern corresponding to the reference signal measurement quantity is a second beam pattern; and mapping the first beam prediction result to a second beam prediction result by using an output adaptation layer.

3. A beam management method, comprising:

   mapping a reference signal measurement quantity to input adaptation information by using an input adaptation layer, wherein a beam pattern corresponding to the reference signal measurement quantity is a first beam pattern; obtaining a first beam prediction result by using a beam prediction model, wherein an input of the beam prediction model comprises the input adaptation information, the input of the beam prediction model matches a second beam pattern, and the first beam pattern is different from the second beam pattern; and mapping the first beam prediction result to a second beam prediction result by using an output adaptation layer.

4. The method according to any one of claims 1 to 3, wherein the first beam prediction result comprises Top-K1 beams in a full beam corresponding to the first beam pattern or the second beam pattern, wherein K1 is a positive integer.

5. The method according to any one of claims 2 to 4, wherein the second beam prediction result comprises Top-K2 beams in the full beam corresponding to the first beam pattern or the second beam pattern, wherein K2 is a positive integer.

6. The method according to any one of claims 1 to 5, wherein the beam prediction model is comprised in a candidate beam prediction model set, each beam prediction model in the candidate beam prediction model set corresponds to one beam pattern, and the beam prediction model corresponds to the second beam pattern.

7. The method according to claim 6, wherein information indicating the second beam pattern is received.

8. The method according to any one of claims 1 to 7, wherein information about the input adaptation layer or information about the output adaptation layer is received.

9. The method according to any one of claims 1 to 7, wherein the input adaptation layer or the output adaptation layer is obtained through training.

10. The method according to claim 9, wherein the method comprises:

obtaining an ideal beam prediction result based on a measurement quantity corresponding to a full beam, mapping a measurement quantity corresponding to a sparse beam of the first beam pattern to the input adaptation information by using the input adaptation layer, obtaining an actual beam prediction result based on the input adaptation information and the beam prediction model, and adjusting a parameter of the input adaptation layer based on the ideal beam prediction result and the actual beam prediction result, to enable a difference between the ideal beam prediction result and the actual beam prediction result to be less than a threshold; or obtaining an ideal beam prediction result based on a measurement quantity corresponding to a full beam, obtaining an actual beam prediction result based on measurement of a sparse beam of the second beam pattern, the beam prediction model, and the output adaptation layer, and adjusting a parameter of the output adaptation layer based on the ideal beam prediction result and the actual beam prediction result, to enable a difference between the ideal beam prediction result and the actual beam prediction result to be less than a threshold; or
obtaining an ideal beam prediction result based on a measurement quantity corresponding to a full beam, mapping a measurement quantity corresponding to a sparse beam of the first beam pattern to the input adaptation information by using the input adaptation layer, obtaining an actual beam prediction result based on the input adaptation information, the beam prediction model, and the output adaptation layer, and adjusting at least one of a parameter of the input adaptation layer and a parameter of the output adaptation layer based on the ideal beam prediction result and the actual beam prediction result, to enable a difference between the ideal beam prediction result and the actual beam prediction result to be less than a threshold.

11. A beam management method, comprising:
sending information about an input adaptation layer, wherein the input adaptation layer is configured to perform adaptation on a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern.

12. A beam management method, comprising:
sending information about an output adaptation layer, wherein the output adaptation layer is configured to map a first beam prediction result output by a beam prediction model to a second beam prediction result, and the first beam prediction result is different from the second beam prediction result.

13. A beam management method, comprising:
sending information about an input adaptation layer and information about an output adaptation layer, wherein the input adaptation layer is configured to perform adaptation on a reference signal measurement quantity to obtain an input of a beam prediction model, a beam pattern corresponding to the reference signal measurement quantity is a first beam pattern, the input of the beam prediction model matches a second beam pattern, and the first beam pattern is different from the second beam pattern; and the output adaptation layer is configured to map a first beam prediction result output by the beam prediction model to a second beam prediction result, and the first beam prediction result is different from the second beam prediction result.

14. The method according to any one of claims 11 to 13, further comprising:
indicating the beam prediction model from a candidate beam prediction model set, wherein each beam prediction model in the candidate beam prediction model set corresponds to one beam pattern, and the beam prediction model corresponds to the second beam pattern.

15. The method according to claim 14, wherein information about each beam prediction model in the candidate beam prediction model set is agreed on in a protocol, or the method comprises: sending information about each beam prediction model in the candidate beam prediction model set.

16. The method according to claim 14, wherein a correspondence between a beam prediction model in the candidate beam prediction model set and a beam pattern is agreed on in a protocol, or the method comprises: sending a correspondence between a beam prediction model in the candidate beam prediction model set and a beam pattern.

17. The method according to claim 14, further comprising:
sending information indicating the second beam pattern.

18. A communication apparatus, configured to implement the method according to any one of claims 1 to 10.

19. A communication apparatus, comprising a processing circuit and a communication circuit, wherein the processing circuit is configured to perform the method according to any one of claims 1 to 10.

20. A communication apparatus, configured to implement the method according to any one of claims 11 to 17.

21. A communication apparatus, comprising a processing circuit and a communication circuit, wherein the processing circuit is configured to perform the method according to any one of claims 11 to 17.

22. A communication system, comprising the communication apparatus according to claim 18 or 19 and the communication apparatus according to claim 20 or 21.

23. A computer-readable storage medium, wherein the computer-readable storage medium is configured to store instructions, and when the instructions are run on a computer, the computer is enabled to perform the method according to any one of claims 1 to 17.

24. A computer program product, comprising instructions, wherein when the instructions are run on a computer, the computer is enabled to perform the method according to any one of claims 1 to 17.

[FIG. 1]

[FIG. 2A]

$$y = f\left(\sum_{i=0}^{n} w_i x_i + b\right)$$

[FIG. 2B]

Neuron  Layer  Weight

Input
layer

Hidden
layer

Output
layer

[FIG. 3A]

Core network
device
| AI model |

OAM
| AI model |

NG                    NG

Access network
device
| AI model |

Xn

Access network
device
| AI model |

Air
interface

Air
interface

Terminal
| AI model |

EP 4 580 281 A1

[FIG. 3B]

31

[FIG. 3C]

[FIG. 3D]

[FIG. 4]

Horizontal direction

Swept beam

Unswept beam

Vertical direction

Codebook

S401

Measurement quantities of swept beams

Beam prediction model

Indexes of Top-K beams

S402

Horizontal direction

Top beam

Vertical direction

Codebook

S404

Horizontal direction

Swept beam

Unswept beam

Vertical direction

Codebook

S403

[FIG. 5]

[FIG. 6]

Pattern 0: 8 beams     Pattern 1: 16 beams     Pattern 2: 16 beams     Pattern 3: 32 beams

■ Swept beam     ▨ Unswept beam

[FIG. 7]

Scenario 1: A pattern matches a
beam prediction model

Pattern A: 16        Beam prediction    Predicted
beams are swept          model          Top-5
                                        beams

Scenario 2: An input format does not
match a beam prediction model

Pattern B: 27   Input adaptation  Beam prediction  Predicted
beams are swept     layer             model        Top-5
                                                   beams

Scenario 3: An output format does not match
a beam prediction model

Pattern A: 16   Beam prediction      Output       Predicted
beams are swept     model          adaptation     Top-3
                                     layer         beams

Scenario 4: An input format and an output format do not
match a beam prediction model

Pattern B: 27   Input adaptation   Beam            Output       Predicted
beams are swept     layer          prediction    adaptation    Top-3
                                   model          layer         beams

EP 4 580 281 A1

[FIG. 8]

[FIG. 9]

[FIG. 10]

| Access network device | | Terminal device |
|---|---|---|

S1001: Capability reporting

S1002: Indicate a beam prediction model

S1003: Deliver an adaptation model

S1004: Beam sweeping

S1005: Feed back an index of a beam

[FIG. 11]

## [FIG. 12A]

Sweep a full beam

Extract a sparse beam

Input adaptation layer

A terminal obtains an index of a top beam as a label $E$

Beam prediction model

Index $D$ of a predicted top beam

Calculate a loss function $Loss(D, E)$

■ Swept beam   ▒ Unswept beam   ▓ Ideal Top-K2 beam

## [FIG. 12B]

Sweep a full beam

Extract a sparse beam

A terminal obtains an index of a top beam as a label $E$

Beam prediction model

Output adaptation layer

Index $D$ of a predicted top beam

Calculate a loss function $Loss(D, E)$

■ Swept beam   ▒ Unswept beam   ▓ Ideal Top-K2 beam

[FIG. 12C]

Sweep a full beam

A terminal obtains an index of a top beam as a label $E$

Extract a sparse beam

Input adaptation layer

Beam prediction model

Output adaptation layer

Index $D$ of a predicted top beam

Calculate a loss function $Loss(D, E)$

■ Swept beam    ▨ Unswept beam    ▨ Ideal Top-K2 beam

EP 4 580 281 A1

[FIG. 13]

Communication
apparatus 1300

Processing unit 1310

Communication unit
1320

[FIG. 14]

Communication apparatus 1400

Processor
1410

Interface circuit
1420

Memory 1430

## INTERNATIONAL SEARCH REPORT

| | |
|---|---|
| | International application No. |
| | **PCT/CN2023/117583** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04W，H04L，H04B

Documentation searched other than minimum documentation to the extent that such documents are included in the fields searched

Electronic data base consulted during the international search (name of data base and, where practicable, search terms used)

CNTXT, ENTXT, DWPI, 3GPP, CNKI: 波束, 预测, 图样, 图案, 参考信号, 神经网络, 人工智能, 机器学习, 模型, beam, prediction, pattern, reference signal, RS, neural network, NN, artificial intelligence, AI, machine learning, model

**C. DOCUMENTS CONSIDERED TO BE RELEVANT**

| Category* | Citation of document, with indication, where appropriate, of the relevant passages | Relevant to claim No. |
|---|---|---|
| Y | CN 111954228 A (BEIJING SAMSUNG TELECOM R&D CENTER et al.) 17 November 2020 (2020-11-17) description, paragraphs [0222]-[0224] and [0253]-[0300], and figures 1-13 | 1-24 |
| Y | CN 112512069 A (PURPLE MOUNTAIN NETWORK COMMUNICATIONS AND SECURITY LABORATORY) 16 March 2021 (2021-03-16) description, paragraphs [0049]-[0051], and figures 1-11 | 1-24 |
| A | CN 112911610 A (SOUTHEAST UNIVERSITY) 04 June 2021 (2021-06-04) entire document | 1-24 |
| A | US 2022190883 A1 (NOKIA TECHNOLOGIES OY) 16 June 2022 (2022-06-16) entire document | 1-24 |
| A | WO 2021112592 A1 (LG ELECTRONICS INC. et al.) 10 June 2021 (2021-06-10) entire document | 1-24 |
| A | ZTE et al. "Enhancements on predictable mobility for beam management" *3GPP TSG RAN WG Meeting REL-18 workshop RWS-210481*, 02 July 2021 (2021-07-02), entire document | 1-24 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2023** | **14 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/117583**

| Patent document cited in search report | | | Publication date (day/month/year) | Patent family member(s) | | | Publication date (day/month/year) |
|---|---|---|---|---|---|---|---|
| CN | 111954228 | A | 17 November 2020 | US | 2020366340 | A1 | 19 November 2020 |
| | | | | WO | 2020231193 | A1 | 19 November 2020 |
| | | | | KR | 20200132735 | A | 25 November 2020 |
| | | | | EP | 3925086 | A1 | 22 December 2021 |
| CN | 112512069 | A | 16 March 2021 | None | | | |
| CN | 112911610 | A | 04 June 2021 | None | | | |
| US | 2022190883 | A1 | 16 June 2022 | WO | 2020214168 | A1 | 22 October 2020 |
| | | | | EP | 3956992 | A1 | 23 February 2022 |
| | | | | CN | 113994598 | A | 28 January 2022 |
| WO | 2021112592 | A1 | 10 June 2021 | KR | 20220103124 | A | 21 July 2022 |

Form PCT/ISA/210 (patent family annex) (July 2022)